(19) Europäisches Patentamt
European Patent Office
Office européen des brevets

(11) **EP 4 332 505 A1**

(12) **EUROPEAN PATENT APPLICATION**

(43) Date of publication:
**06.03.2024 Bulletin 2024/10**

(21) Application number: **22193750.1**

(22) Date of filing: **02.09.2022**

(51) International Patent Classification (IPC):
**G01C 21/28** (2006.01)   **G01C 21/34** (2006.01)

(52) Cooperative Patent Classification (CPC):
**G01C 21/3461; G01C 21/28**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **TomTom Navigation B.V.**
  **1011 AC Amsterdam (NL)**

• **TomTom Traffic B.V.**
  **1011 AC Amsterdam (NL)**

(72) Inventors:
• **van der Laan, Antoine Carl**
  **1011AC Amsterdam (NL)**
• **van Hulst, Johannes Michaël**
  **1011AC Amsterdam (NL)**

(74) Representative: **Boult Wade Tennant LLP**
  **Salisbury Square House**
  **8 Salisbury Square**
  **London EC4Y 8AP (GB)**

(54) **SYSTEMS AND METHOD FOR IMPROVED NAVIGATION**

(57)     There is provided a method (and corresponding systems) of identifying a mode of transport of a user of a navigational client, the method comprising the following steps. Obtaining route data corresponding to a completed portion of a current route of a user of the navigational client, the completed portion of a current route comprising one or more road segments traversed by the user to reach the current location of the user. Identifying, using the route data, a mode of transport of the user of the navigational client wherein said identification is based at least in part on attributes of one or more of the road segments of the completed portion of the current route.

Figure 2b

**Description**

**Field of the invention**

The present invention relates to navigational guidance systems and methods and in particular the determination of routing restrictions.

**Background of the invention**

Navigational guidance systems assist users in traveling from a start point (or initial location) to a destination location. Such navigational guidance systems usually use a routing component (or module) to determine a route between the initial location and the destination location. The navigational system can then provide the route to the user. Navigational guidance may be provided to the user to aid the user in following the particular route. Often navigational guidance can be in the form of turn-by-turn instructions, or other such indications to the user of what action to take to follow the route based upon the user's current location.

Such navigational guidance has become popular with users not only for aiding in navigation to and from unfamiliar locations, but also in determining more suitable (or efficient) routes between known locations. For example, such navigational systems may make use of real-time traffic data when determining a route so as to minimize traffic delays and/or avoid temporary disruption (such as road closures etc.)

Similarly the use of such navigational guidance systems has expanded beyond personal motor vehicles and such systems are now routinely used by users of many other modes of transport including commercial vehicles (such as large goods vehicles, commercial passenger transport vehicles), pedal cycles and even as navigational aids to pedestrian travel.

Depending on the vehicle, or mode of transport, used by the user the user may have particular restrictions or requirements motivated by safety or technical suitability of different modes of transport for different routes.

The routing component of the navigation system determines the route between the source and the destination that optimal for the user. The optimal route may be a fastest route (with the shortest travel time), a shortest route (a minimum length route) or a route that best matches a (weighted) combination of routing parameters configured by a user.

Most navigation systems provide a user with a user interface to configure a collection of routing settings, or parameters, for use in the routing component, which can reflect the various requirements of the user and the user's chosen mode of transport. The potentially large parameter space for the routing settings and the largely hidden contribution of various routing settings and attributes of road segments in routing component makes it difficult for most users to obtain recommended routes that are suitable for the particular restrictions.

Equally, such restrictions may change, for example as a user switched between a car and a bicycle as part of a journey whilst using the same navigation guidance system, such as that embodied in a smartphone. Indeed for such navigational guidance systems each change of transport mode by the user may need a switch the in the parameters to reflect the new mode of transport. For example a car to public transport to walking to cycling and so on. This increases the burden on the user to be repeatedly changing numerous routing parameters. The consequence of routing parameters being set incorrectly can be severe with inappropriate routes perhaps meaning that a user cannot complete their journey as they are directed to a turn they are not allowed to make in their vehicle or a road they cannot physically traverse in their vehicle, all the way to safety hazards with users in motorized vehicles being directed along pedestrian footpaths, or users on foot being directed along busy freeways.

**Summary of the invention**

It is an object of the invention to provide systems and methods for identifying a mode of transport of a user of a navigational client to more accurately account for vehicle routing restrictions. In particular, data regarding the route (or routes) travelled by the user is used to identify the mode of transport or vehicle being used.

In a first aspect there is provided a method of identifying a mode of transport (or vehicle) of a user of a navigational client. The method comprises obtaining route data corresponding to a completed portion of a current route of a user of the navigational client. The completed portion of a current route comprising one or more road segments traversed by the user to reach the current location of the user. The method continues by identifying, using the route data, a mode of transport of the user of the navigational client. Said identification is based at least in part on attributes of one or more of the road segments of the completed portion of the current route. The identification may comprise determining respective probabilities for a plurality of possible modes of transport. Here the identified mode of transport may be the possible mode of transport with the greatest (or highest) probability.

Examples of the attributes of a road segment include any one or more of: a length of the road segment; a measure of congestion for the road segment; a vehicle restriction for the road segment; a speed limit for the road segment;

a Functional Road Class; an indication that the road segment comprises a toll road; a road segment gradient; a width of the road segment; a turn radius for a turn of the road segment; an average time for traversing a junction of the road segment; an average travel time for the road segment; and an average speed for the road segment. The attributes may be retrieved by the navigational client from the electronic map. Typically, the navigational client has stored (or has access to) an electronic map of the road network. The electronic map contains nodes connected by road segments that have associated attributes describing properties of the road segment. The navigational client typically uses the electronic ap when generating recommended routes and/or when providing navigational guidance.

The mode of transport may be (or indicate) any one of: walking; cycling; horse riding; public transport; driving; skateboarding; rollerblading; sailing; and flying. The mode of transport may indicate a vehicle type. Examples of vehicle types include any of: a car; a light goods vehicle; a heavy goods vehicle; a motorcycle; a bicycle; a bus; an articulated vehicle; ferry; train; pedestrian; a skateboard; rollerblades; a scooter; an e-scooter; an e-skateboard; a boat; an aeroplane, and so on. The mode of transport may indicate a power source (such as a power source of the vehicle).

In some embodiments the method comprises obtaining further route data as the user travels along the current route. It will be appreciated that such further route data can be collected in an ongoing basis. The probabilities for the plurality of possible modes of transport may be iteratively updated, as the user travels along the current route, based on the further route data. For example, the probabilities for the plurality of possible modes of transport may be updated in response to the further route data indicating the user has traversed (or completed or travelled along) a further road segment.

In some embodiments the route data comprises global positioning data for the completed portion of the current route. The step of determining may then comprise identifying the one or more road segments traversed by the user to reach the current location of the user by matching the global positioning data to a map of possible road segments.

In some embodiments the route data comprises sensor data (such as sensor data collected by or of the navigational client) associated with the completed portion of a current route. Said identifying may then be based at least in part on the sensor data. Examples of sensor data includes any one or more of: a speed of travel; an acceleration; noise levels; detected electromagnetic signals; vibration data; timestamped location data; time; direction of travel; light sensor data; and camera data.

In some embodiments one or more progress indicators may be calculated (or determined) for a completed portion of a current route based on the route data Said identifying may be then based at least in part on the determined progress indicators. Examples of progress indicators includes any one or more of: a turn radius (such as a minimum turn radius); a speed of travel; a time of travel; a direction of travel; an acceleration (such as a maximum acceleration); a deceleration (such as a maximum deceleration); a braking distance; and a vehicle mass. Such progress indicators may be calculated as extremum values and/or mean (or any other average) values.

In some embodiments the step of identifying a mode of transport comprises identifying, using map data, one or more points of interest associated with a particular mode of transportation on the completed portion of a current route.

In some embodiments the method may comprise generating, by the navigational client, a route between an initial location and a requested end location in accordance with the identified mode of transport. Navigational guidance may then be provided to the user for following the generated route, based on the generated route and a current location of the user.

In some embodiments the method may comprise identifying one or more routing restrictions based on the determined mode of transport, enabling the navigational client to generate recommended routes in accordance with the one or more routing restrictions. Examples of routing restrictions include any one more of: a minimum height restriction allowed on a recommended route; a minimum and/or maximum speed restriction allowed on a recommended route; a minimum weight restriction allowed on a recommended route; a minimum width restriction allowed on a recommended route; a road type restriction (such as a restriction for a road limiting the type or class of vehicles that may traverse it).

The navigational client may generate a route between an initial location and a requested end location in accordance with the one or more routing restrictions, and provide navigational guidance to the user for following the generated route, based on the generated route and a current location of the user.

An alert (such as a navigational alert or warning) may be generated for (or provided to) the user in response to the navigation client detecting that a current road segment has an attribute that contravenes at least one of the routing restrictions.

In some embodiments the method may comprise identifying, by the navigational client a road segment for the current location of the user of the navigational client and, in response to the identified road segment contravening one of the routing restrictions, providing an alert to the user.

In some embodiments the route data (or part thereof) may correspond to (or comprise) one or more previously travelled routes a user of the navigational client, each previously travelled route comprising a plurality of road segments. Said identifying may be based at least in part on attributes of road segments of the one or more previously travelled routes.

According to a second aspect of the invention there is provided a system (such as a navigational client) adapted to carry out a method of identifying a mode of transport (or vehicle) of a user of a navigational client. The method comprises obtaining route data corresponding to a completed portion of a current route of a user of the navigational client. The completed portion of a current route comprising one or more road segments traversed by the user to reach the current location of the user. The method continues by identifying, using the route data, a mode of transport of the user of the navigational client. Said identification is based at least in part on attributes of one or more of the road segments of the completed portion of the current route. The identification may comprise determining respective probabilities for a plurality of possible modes of transport. Here the identified mode of transport may be the possible mode of transport with the greatest (or highest) probability.

Such a system may be arranged to carry out any of the methods according to the first aspect of the invention.

According to a third aspect of the invention, there is provided a computer program which, when executed by one or more processors, causes the one or more processors to carry out any method according to the first aspect of the invention. The computer-program may be stored on a computer-readable medium.

**Brief description of the drawings**

Embodiments of the invention will now be described, by way of example only, with reference to the accompanying drawings, in which:

Figure 1 schematically illustrates an example of a computer system;
Figure 2a schematically illustrates an example system according to some embodiments of the invention;
Figure 2b schematically illustrates an example of a route between an initial location and a destination location;
Figure 3a is a flowchart illustrating a method that may be performed by the system of figure 2a;
Figure 3b is a flowchart illustrating a method that may be used to train the machine learning algorithm (or classifier) used in a variant of the system of figure 2a;
Figure 4 schematically illustrates an example navigation system (or client), such as may be used in the system described in reference to figures 2a-3b;
Figure 5a schematically illustrates an example routing parameter generation module (or system), such as may be used in the system described in reference to figures 2a-3b;
Figure 5b schematically illustrates a more detailed example of the route analysis component, discussed previously in relation to figure 5a.
Figure 6 shows an example of a route from a start location to a destination location with deviations;
Figure 7 schematically illustrates an example implementation of a correlation determination system;
Figure 8 schematically illustrates a variant of the routing component in which the functionality obtained using the routing settings is part of the routing component;
Figure 9 schematically illustrates a variant navigational system;
Figure 10 is a flowchart illustrating a method that may be performed by the variant navigational system of figure 9 to detect the mode of transport of the user;
Figure 11 schematically illustrates an example variant implementation of a vehicle detection module such as that shown in figure 9;
Figure 12 shows several map portions showing route traces of previously travelled routes overlaid as a heat map.

**Detailed description of embodiments of the invention**

In the description that follows and in the figures, certain embodiments of the invention are described. However, it will be appreciated that the invention is not limited to the embodiments that are described and that some embodiments may not include all of the features that are described below. It will be evident, however, that various modifications and changes may be made herein without departing from the broader spirit and scope of the invention as set forth in the appended claims.

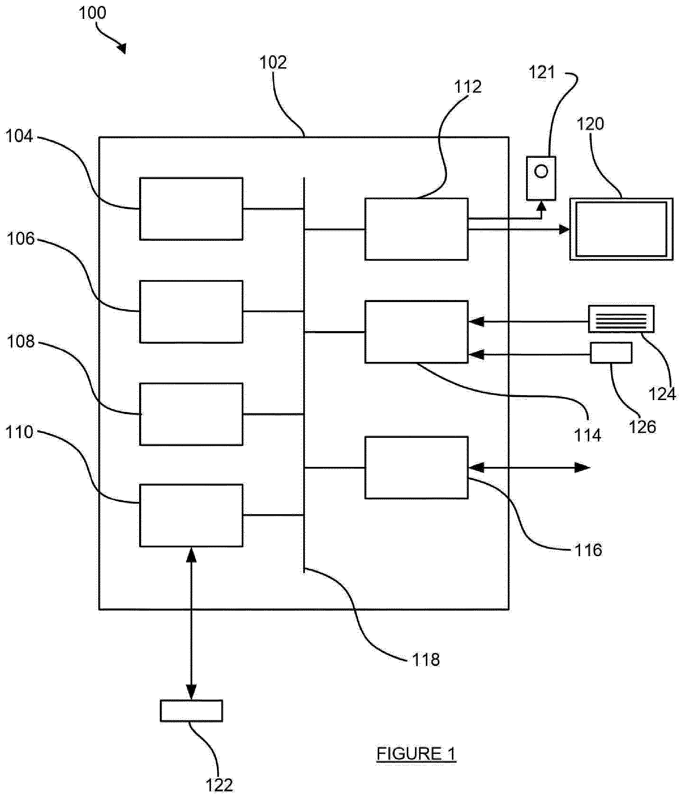

Figure 1 schematically illustrates an example of a computer system 100. The system 100 comprises a computer 102. The computer 102 comprises: a storage medium 104, a memory 106, a processor 108, an interface 110, a user output interface 112, a user input interface 114 and a network interface 116, which are all linked together over one or more communication buses 118.

The storage medium 104 may be any form of non-volatile data storage device such as one or more of a hard disk drive, a magnetic disc, an optical disc, a ROM, etc. The storage medium 104 may store an operating system for the processor 108 to execute in order for the computer 102 to function. The storage medium 104 may also store one or more computer programs (or software or instructions or code).

The memory 106 may be any random access memory (storage unit or volatile storage medium) suitable for storing data and/or computer programs (or software or instructions or code).

The processor 108 may be any data processing unit suitable for executing one or more computer programs

EP 4 332 505 A1

(such as those stored on the storage medium 104 and/or in the memory 106), some of which may be computer programs according to embodiments of the invention or computer programs that, when executed by the processor 108, cause the processor 108 to carry out a method according to an embodiment of the invention and configure the system 100 to be a system according to an embodiment of the invention. The processor 108 may comprise a single data processing unit or multiple data processing units operating in parallel or in cooperation with each other. The processor 108, in carrying out data processing operations for embodiments of the invention, may store data to and/or read data from the storage medium 104 and/or the memory 106.

The interface 110 may be any unit for providing an interface to a device 122 external to, or removable from, the computer 102. The device 122 may be a data storage device, for example, one or more of an optical disc, a magnetic disc, a solid-state-storage device, etc. The device 122 may have processing capabilities - for example, the device may be a smart card. The interface 110 may therefore access data from, or provide data to, or interface with, the device 122 in accordance with one or more commands that it receives from the processor 108.

The user input interface 114 is arranged to receive input from a user, or operator, of the system 100. The user may provide this input via one or more input devices of the system 100, such as a mouse (or other pointing device) 126 and/or a keyboard 124, that are connected to, or in communication with, the user input interface 114. However, it will be appreciated that the user may provide input to the computer 102 via one or more additional or alternative input devices (such as a touch screen). The computer 102 may store the input received from the input devices via the user input interface 114 in the memory 106 for the processor 108 to subsequently access and process, or may pass it straight to the processor 108, so that the processor 108 can respond to the user input accordingly.

The user output interface 112 is arranged to provide a graphical/visual and/or audio output to a user, or operator, of the system 100. As such, the processor 108 may be arranged to instruct the user output interface 112 to form an image/video signal representing a desired graphical output, and to provide this signal to a monitor (or screen or display unit) 120 of the system 100 that is connected to the user output interface 112. Additionally or alternatively, the processor 108 may be arranged to instruct the user output interface 112 to form an audio signal representing a desired audio output, and to provide this signal to one or more speakers 121 of the system 100 that is connected to the user output interface 112.

Finally, the network interface 116 provides functionality for the computer 102 to download data from and/or upload data to one or more data communication networks.

It will be appreciated that the architecture of the system 100 illustrated in figure 1 and described above is merely exemplary and that other computer systems 100 with different architectures (for example with fewer components than shown in figure 1 or with additional and/or alternative components than shown in figure 1) may be used in embodiments of the invention. As examples, the computer system 100 could comprise one or more of: a personal computer; a server computer; a mobile telephone; a tablet; a laptop; a television set; a set top box; a games console; other mobile devices or consumer electronics devices; etc. It will also be appreciated that the computer system 100 may be a part of or be embodied in a vehicle (such as a car; a light goods vehicle; a heavy goods vehicle; a motorcycle; a bicycle; a bus; an articulated vehicle; etc.) the computer system 100 may form part of (or be) the vehicle's onboard entertainment system or other onboard computing device.

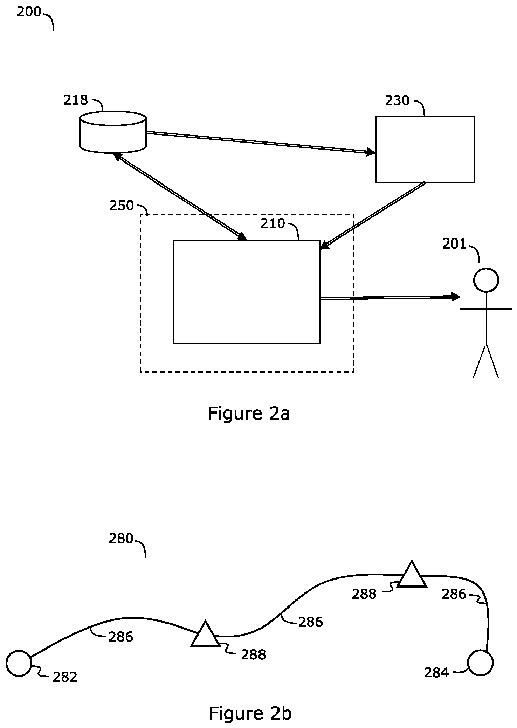

Figure 2a schematically illustrates an example system 200 according to some embodiments of the invention. The system 200 comprises a navigational system 210, a traces (or travelled routes) store 218, and a routing parameter generation module 230.

The navigational system is typically associated (or configured for use with) a mode of transport. In figure 2 the navigational system 218 is shown as being part of (or mounted to or disposed within) a vehicle 250, which corresponds to the mode of transport. However, it will be appreciated that the navigational system may be separate from the vehicle. For example, the navigational system may be carried (or disposed on) the user 201. It will also be appreciated that some modes of transport (such as walking) may not involve (or use) a vehicle 250. As such in some embodiments the vehicle 250 may be omitted.

The navigational system 210 is arranged to generate a route between an initial (or start) location and a requested end location (or destination location). In particular, the navigation system 210 typically is arranged to assist a user 201 to determine a route from the start location to the destination location. The destination location is typically specified directly by the user 201. The start location may be specified by the user 201 or, alternatively, the start location may be determined based on the current location of the user. For example, the navigational system may use a positioning system (or sensor) that indicates (or determines) the user's location.

It will be appreciated that typically there are more than one possible routes between a given start location and destination location. The navigational system is arranged to generate (or determine or recommend) a route in accordance with a set of one or more routing parameters (or constraints), which will be described further shortly below.

Figure 2b schematically illustrates an example of a route 280 between an initial location 282 and a destination location 284. The route 280 comprises a plurality of segments (or road segments) 286. The plurality of segments 286 form a path between the initial location and the destination location. Each segment corresponds to (or represents or is

5

associated with) a road (or part of a road). The skilled person would understand a road to be (or comprise) a path (or thoroughfare or other traversable land feature) along which a user may travel. In particular, it will be appreciated that a given road may be suitable for only a subset of modes of transport. For example, pavements (or sidewalks or other pedestrian paths) may be unsuitable for vehicular traversal, and suitable for pedestrian traversal (such as by walking, running etc.). Similarly, highways, for example, may be suitable for vehicular travel, (such as automobiles, trucks, busses, and other motorized transportation) but unsuitable for pedestrian travel. Additionally, or alternatively, a road may comprise multiple elements, such as a carriageway suitable for motorized transport and a pavement (or sidewalk) suitable for pedestrian travel.

Also shown in figure 2b are nodes 288. The start location 282 and/or the destination location 284 may also be nodes 288. Each road segment 286 starts and ends at a respective node 288. The nodes 288 may be considered to represent junctions or other points where road segments 286 meet.

In other words a route 280 comprises a sequence of connected road segments 286 where the end node 288 of one road segment 286 is the start node 288 of the next road segment 286 of the route 280. The route 280 has a start location 282 and a destination location 284.

Each segment 286 comprises (or is associated with) one or more attributes. An attribute may be thought of as describing (or encoding or otherwise indicating) a real-world feature of the road segment. Such attributes will be discussed in further detail shortly, however, examples of attributes include any of: a length of the road segment; a measure of congestion for the road segment; a vehicle restriction for the road segment; a speed limit for the road segment; a functional road class of the road segment; a width of the road segment; a slope (such as a maximum slope) of a road segment; a turn radius (such as a maximum or minimum turn radius) of a road segment; centerline (or trajectory) of the road; and so on. Examples of functional road classes include: arterial, collector, and local. Returning to figure 2a, the navigational system is configured to select the road segments 286 of the route 280 based at least in part on the routing parameters. In particular, the routing parameters typically define (or provide or specify) constraints or requirements in regard to the attributes of road segments 288 of the route 280. A routing parameter may represent a hard (or definite) constraint such as prohibiting (or alternatively requiring) road segments with a particular attribute or combination of attributes. Additionally, or alternatively routing parameters may specify soft (or preferred) constraints such as seeking to maximize (or minimize) the number of road segments with a given attribute or combination of attributes. Further details regarding routing parameters are provided shortly below.

As such, the navigation system may be thought of as being configured to generate an optimal (or most appropriate) route between the initial location and the destination location in view of the routing parameters.

The traces (or travelled routes) store 218 is arranged to store one or more route traces of previously travelled routes 280 of the user 201 of the navigational system 210. A trace (or route trace) comprises a route 280 previously travelled by the user 201. Typically, a trace specifies the road segments 286 of the route 280, the initial location 282 and the destination location 284. The trace may also comprise data characterizing the user's journey along the route. Such data may be (or comprise) any one or more of: an average speed of the user over the route; an average speed of the user over one or more road segments of the route; a maximum (and/or minimum) speed of the user over the route; a maximum (and/or minimum) speed of the user over one or more road segments of the route; a start time for the user's journey along the route; a finish time for the user's journey along the route; one or more traffic volumes for one or more portions of the route; one or more weather conditions for one or more portions of the route; and so on.

There is also shown a routing parameter generation module 230 configured to update an initial set of routing parameters of the navigational system 210 based on routes 280 previously travelled by the user 201. The routing parameter generation module 230 is configured to obtain one or more route traces of the previously travelled routes 280 of the user 201 of the navigational system 210 from the traces store 218.

The routing parameter generation module 230 is configured to generate routing parameters (or update a set of initial routing parameters) based on the attributes of the road segments in the one or more previously travelled routes 280. The routing parameter generation module 230 may be configured to generate (or update) a routing parameter based on a pre-determined relationship between the routing parameter and one or more road attributes.

For example, where the navigation system 210 is arranged to penalize, in accordance with the routing parameter, the inclusion of a road segment in a generated route based on the attributes of the road segment, the routing parameter may be thought of as specifying a penalty based on a combination of the corresponding road attributes. The routing parameter generation module 230 may be configured to update the routing parameter such that the penalty is reduced for the road segments present in the previously travelled routes.

Additionally, or alternatively the routing parameter generation module 230 may be configured to generate (for example by using the navigational system 210) based on the initial set of routing parameters, one or more recommended routes corresponding to the previously travelled routes. In particular where each previously travelled route and the corresponding recommended route has a respective common start location and a respective common destination location. The routing parameter generation module 230 may then determine a routing parameter update based on a difference between attributes of the road segments of the previously travelled routes and attributes of the road segments of the corresponding recommended routes. For example, the routing parameter generation module 230 may update one or more routing parameters as a weighted linear combination of the difference between attributes of the road segments of the previously travelled routes and attributes of the road segments of the corresponding recommended routes.

Additionally, or alternatively the routing parameter generation module 230 may be arranged to apply a trained machine learning algorithm to the route traces to determine updated routing parameters. The trained machine learning algorithm is typically trained to take at least in part as input attributes of the road segments of a previously travelled route 280 along with the start and destination locations 282; 284 of the route 280 and provide as output routing parameters that would cause the navigational system 210 to generate the input route 280. Further detail regarding such a machine learning system is provided shortly below, however it will be appreciated that a suitable trained machine learning algorithm may be obtained using existing machine learning techniques by training the machine learning algorithm using a training data set comprising a plurality of routes generated by a navigational system 210, each route 280 labelled with the routing parameters used to generate said route 280. Examples of suitable machine learning algorithms include multi-label classifiers including any of: neural network algorithms; decision tree algorithms (such as MMC or MMDT); k-nearest neighbor algorithms; and so on.

The routing parameter generation module 230 is also configured to provide the updated (or newly generated) routing parameters to the navigational system to thereby enable the navigational system to generate new routes based on the updated routing parameters.

It will be appreciated that the navigational system 210 may typically be configured to provide navigational guidance to the user 201 to enable to user to follow the route 280 generated by the navigational system 210. Such navigational guidance may comprise any one or more of: visual indications indicating upcoming turns (and/or maneuvers); audible indications indicating upcoming turns (and/or maneuvers); visual indications indicating missed turns; audible indications indicating missed turns; and/or other such guidance usually referred to in the art as turn-by-turn guidance. It will also be appreciated that the routing parameter generation module 230 and/or the traces store 218 may be part of (or be embodied on) the navigational system 210. Equally the routing parameter generation module 230 and/or the traces store 218 may be part of (or be embodied or implemented on) one or more separate computer systems (such as a computer system 100 described above) connected or connectable to the navigational system 210 via a suitable data connection or network. Examples of suitable data connections include wireless connections (such as WiFi; cellular; LTE, or other such connections) and/or wired connections (such as ethernet, USB, CANBUS, or other such connections). As such it will be appreciated that the routing parameter generation module 230 may be operated independently of the navigational system 210 and/or the traces store 218 and the updating of the routing parameters may be carried out at a separate time to, and independently of, use of the navigational system 210.

The navigational system 210 may be part of (or embodied or implemented on) a computer system such as the computer system 100 described above.

In the discussion above reference is made to updating existing routing parameters. It will be appreciated that in some instances such updating may involve calculating entirely new values for the routing parameters and replacing the existing routing parameter values with these. Equally in other cases updating may involve calculating a routing parameter update and applying this to the existing routing parameters. It will also be appreciated that such methods do not require the existence of existing routing parameters. In the case where there are no existing parameters for a user a default, or standard, set of pre-determined routing parameters may be used as the initial set of routing parameters.

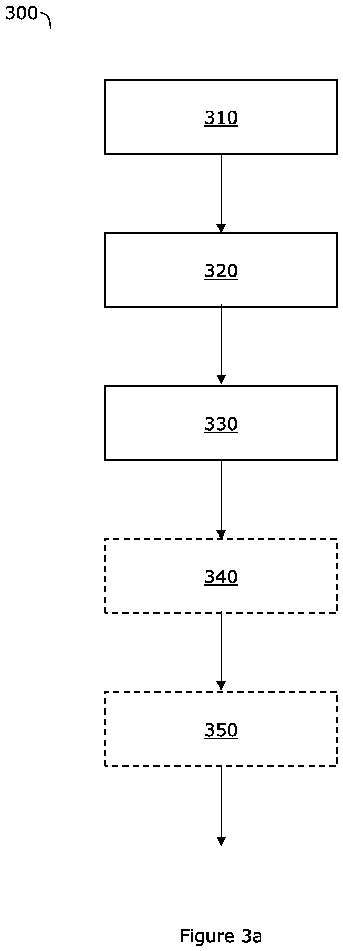

Figure 3a is a flowchart illustrating a method 300 that may be performed by the system 200 of figure 2a.

At a step 310, one or more route traces of previously travelled routes of a user of the navigational system 210 are obtained. Each route comprises a plurality of road segments. The previously travelled routes are typically obtained in the form of traces, as discussed above.

At a step 320 an initial set of routing parameters of the navigational system is updated based on attributes of the road segments of the previously travelled routes. The step 320 may comprise applying a trained machine learning algorithm to the route traces to determine updated routing parameters. The trained machine learning algorithm is typically trained to take at least in part as input attributes of the road segments of a previously travelled route 280 along with the start and destination locations 282; 284 of the route 280 and provide as output routing parameters that would cause the navigational system 210 to generate the input route 280.

Additionally or alternatively the step 320 may comprise generating, based on an initial set of routing parameters, one or more recommended routes corresponding to the respective start and destination locations of one or more previously travelled routes. The step 320 may then comprise determining a routing parameter update based on a difference between attributes of the road segments of the previously travelled routes and attributes of the road segments of the corresponding recommended routes. In this way the step 320 may be considered to identify the differences in road attributes between the user selected routes (i.e. the travelled routes) and the routes recommended using the current routing parameters. The step may then be thought of as updating the routing parameters to reduce or minimize said differences.

At an optional step 330, the navigational system 210 is enabled to generate recommended routes using the updated routing parameters. The step 330 may comprise updating the routing parameters stored by the navigational system 210. It will be appreciated that this step my be implicit in the above step 320, for example if the updating of the routing parameters in the step 320 is done in place in the navigational system 210.

At an optional step 340, a route between an initial location and a requested end location is generated by the navigational system 210. The route is generated based on the updated routing parameters as discussed above. The recommended route may be displayed (or otherwise) to the user for following.

At an optional step 350 navigational guidance is provided to the user for following the generated route, based on the generated route and a current location of the user.

The step 340 and the step 350 are presented as optional since, as it will be appreciated, they may be carried out separate to the other steps of the method 300 of updating the routing parameters. For example, the updating of the routing parameters may be carried out periodically, or infrequently, at a different time to navigational use of the navigational system.

Alternatively, the method 300 may be carried out part way through a user's journey. In this case the previously travelled route may be a previously travelled section of a current route. Here the start location of the step 340 may be the current location of the user, and the steps 310 and 320 may be carried out in response to detecting a deviation by the user from the current recommended route (for example by taking a different turn than that required by the current route). As such in this scenario the method may result in the previously recommended route being updated (or changed).

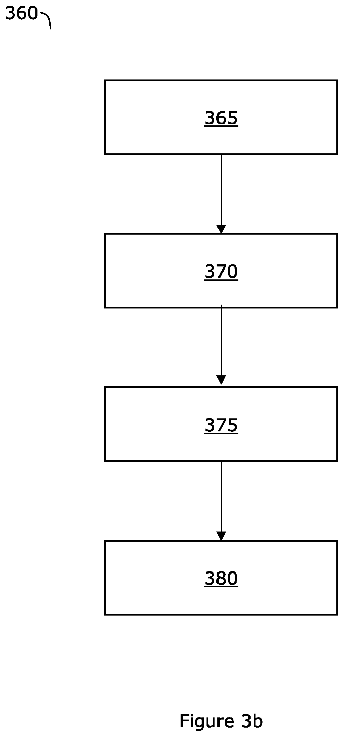

Figure 3b is a flowchart illustrating a method 360 that may be used to train the machine learning algorithm (or classifier) used in a variant of the system 200 described above. In this variant the trained machine learning algorithm trained to take at least in part as input attributes of the road segments of a previously travelled route 280 along with the start and destination locations 282; 284 of the route 280 and provide as output routing parameters that would cause the navigational system 210 to generate the input route 280. The method 365 may be carried out on any suitable computer system, such as the computer system 2000 described above

At a step 365 a set of start locations and a set of destination locations are obtained. Such locations may be obtained from previous route traces of the user (or other users). Additionally, or alternatively start and destination locations may be chosen based on map attributes (such as any of population density, traffic density etc.). The start and destination locations may be chosen to sample (or span) a map area (such as a map area associated with, or frequently used by, the user).

At a step 370 a navigational system generates, for a number of combinations of the start and end locations recommended routes according to a plurality of different sets of routing parameters. The sets of routing parameters may be chosen to sample (or span) the possible sets of routing parameters. Additionally, or alternatively sets of commonly (or previously) used routing parameters by one or more users may be used. Random sampling may be used to select the sets of routing parameters.

At a step 375 a machine learning algorithm (or classifier) is trained using the plurality of recommended routes and the corresponding sets of routing parameters as training data. In particular, the recommended routes are each labeled with the respective set of routing parameters in the training data. In this way the training thereby generates a trained machine learning algorithm enabled to determine a set of routing parameters that corresponds to an input route. Such a process is understood as supervised learning.

At a step 380 the trained machine learning classifier is provided to the navigational system to enable to navigational system to update routing parameters based on previously travelled routes. The classifier may be stored on and used by the navigational system itself. Alternatively, the navigational system may be provided access to a remote system, via a suitable data connection as previously discussed, where the classifier is executed.

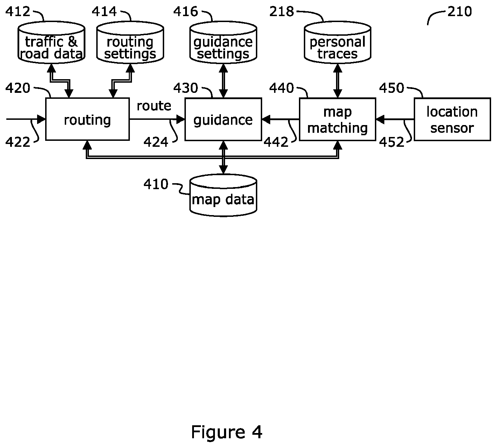

Figure 4 schematically illustrates an example navigation system (or client) 210, such as may be used in the system 200 described in reference to figures 2a-3b. The navigation system (or client) 210 is show in figure 4 with the following components.

A routing component 420 of the navigation system is configured to determine a recommended (or optimal) route 424 (such as a route 280 described previously) based on routing input data 422. The routing input data comprises a start location 282 and a destination location 284. Typically the routing input data also comprises a start time. The routing component 420 is configured to use map data 410 and routing parameters (or settings) 414 to determine the recommended route 424 to the destination location 284. The routing component 420 may also be configured to use road and traffic data 412 in generating (or determining) the recommended route. In this way, and often in combination with the start time the routing component 420 is able to take account of traffic conditions (or predicted traffic conditions), road closures, road indictment and so on in determining the route. The navigation client 400 is arranged to present the recommended route 424 to the user 201. The navigation client 400 may present the route 424 by displaying a route overview, such as superimposed on a map. The navigation client 400 may present the route 424 by displaying a listing of turns and/or roads for the user 201 to follow.

The recommended route 424 is the route that is optimal with respect to (or considering) the routing parameters 414. An optimal route may be thought of as a route which provides the closest match for the routing parameters (or obeys the routing parameters most closely). The routing parameters 414 may, at least initially, be configured or provided by the user 201. Alternatively the routing parameters 414 may, at least initially, be configured or provided to be default values, which may be pre-loaded on the navigation client 400.

The figure 4 further shows a guidance component 430 that obtains the recommended route 424. The guidance component 430 also obtains a map matched location 442 from a map matching component 440 to generate navigation information for the user 201. Such navigation information may include any one or more of: a current location on the map, turn instructions, alerts relating to the route, etc. Examples of alerts include any one or more of:

- congestion alerts (such as indications of congestion on the route),
- road closure alerts (such as indications of road closures on the route),
- speed limit alerts (such as indicating an upcoming change in speed limit on the route and/or the vehicle exceeding the current speed limit on the route),
- speed camera alerts (such as indications of speed cameras on the route and/or indications that the vehicle is approaching a speed camera).

Such navigation information may be displayed to the user. In this way it will be understood that the guidance component 430 is configured to provide navigational guidance to the user 201 to enable to user 201 to follow the recommended route 424 (as discussed previously above). The navigation system also may provide alternative routes in response to changed travel conditions.

The map matching component 440 is configured to obtain location data 452 from a location sensor 450 and matches the sensor location data to a map location. The navigational client may then determine the route travelled by the user 201. It will be appreciated that the route travelled by the user may differ from the recommended route 242. The travelled route (and optionally the recommended route 424) may be stored as a route trace in the traces store 218 as described previously.

The map data 410 describes a road network in a map area. The map data 410 typically has (or comprises) a graph data structure containing nodes (such as junctions or road start and/or end points) that are connected by road segments. As described previously the road segments have (or comprise) associated attributes. The attributes of a road segment may describe (or define) the real-world features of said road segment.

As such it will be understood that based on the attributes of the road segments of the possible paths between a given start location 282 and destination location 284 the routing component may determine a recommended (or optimal) route 424 based on one or more routing parameters 414 (or requirements or constraints). For example, the routing component 420 may use a length attribute of the road segments 286 to determine a distance between the start and destination locations 282; 284 for each of the paths between the locations. This enables the routing component 420 to determine a shortest length route between the start and destination locations 282; 284. This may then be termed the optimal (or recommended route) if the there was only one routing parameter and the parameter required the shortest length route.

In another example, the routing component 420 may additionally use an average travel speed attribute of each road segment 286 to determine the time to traverse the road segments 286 and a turn time attribute of each road segment 286 to determine an estimated travel time for a given route 280 between the start and destination locations 282; 284. This enables the routing component 420 to determine a fastest (or shortest travel time) route. This may then be termed the optimal (or recommended route) if the there was a routing parameter requiring the shortest travel time route.

It will be appreciated that the routing component 420 may be configured to use other attributes such as functional road class and permitted vehicle types to determine the recommended route 424 in dependence of the routing parameters 414. For example, a routing parameter may specify a vehicle type as weighing more than 18 tons. The routing component 420 may then discard any route having a road segment that has a maximum weight limit attribute of less than 18 tons.

Optionally, the routing component 420 may use other information sources 416 such as traffic information, road closure information, and weather information. This enables the routing component 420 to take account of current road closures and current traffic congestion in the route generation. It will be appreciated that this other information may be stored alongside (or as part of) the route traces.

The routing component 420 is typically configures to use the routing parameters to control the relevance of attributes of the road segments when determining the optimal route between the start and destination locations. For example, the routing component may determine a weighted combination of the road segment attributes to determine in a cost function to determine the optimal route. In this way multiple, competing or overlapping, routing parameters may be taken account of when generating the recommended route. This enables the routing component 420 to generate a route where there may be mutually competing requirements present in the routing parameters. Hard requirements that must be met, such as a weight and/or size restriction for the vehicle can be included as infinite (or effectively infinite) weight components.

It will be appreciated that the wide range of routing parameters and their combination in a cost function makes the effect of individual routing parameter changes on route generation difficult for an end user 210 to discern. For some start and destination location combination the effect of large changes on the routing parameters may be small in respect of the generated route as the number of possible routes is already low. For other combination small changes in the routing parameters may result in vastly different routes being generated.

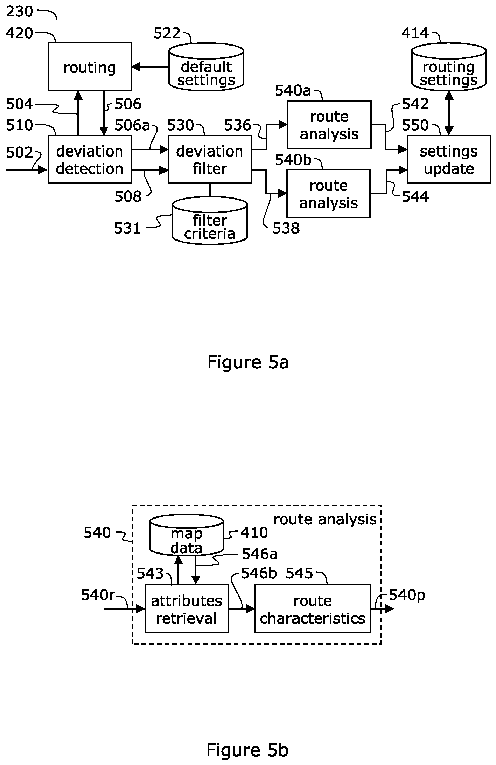

Figure 5a schematically illustrates an example routing parameter generation module (or system) 230, such as may be used in the system 200 described in reference to figures 2a-3b. Figure 5a shows the routing parameter generation module 230 interfaced (or connected) to a routing component 420. The routing component 420 may be as described above in reference to figure 4. The routing component 420 may be part of the navigational system 210, or may be a separate routing component part of the routing parameter generation module 430.

The routing parameter generation module 230 is configured to receive one or more route traces of previously travelled routes 502. A previously traveled route 502 is a route 280 (as described above) that comprises a sequence of connected road segments 286 between a start location 282 and a destination location 284. The traveled route 502 may be obtained from a personal traces store 218 or it may be a current route.

A deviation detection component 510 is configured to acquire the travelled route 502 and generates route data 504 comprising a start location 282, a destination location 284 (and optionally a start time, or a current time). The start time may be a time of day and day of the week rather than a time at a specific date.

The routing component 420 acquires the route data 504 and generates a recommended route 506. The recommended route 506 is the recommended route generated between the start location and the destination location based on the current routing parameters. As described previously the routing component 420 may use other information sources such as traffic information, weather information and road network information.

The deviation detection component 510 is arranged to obtain the default route and determine if the travelled route 502 deviates from the recommended route 506. A recommended route 506 deviates from a travelled route 502 if the recommended route 506 has at least one road segment that differs from the travelled route 502. The deviation detection component 510 is arranged to output the travelled route 502 as a deviation route 508 along with the recommended route 506. The differing road segments of the deviation route 508 may be connected road segments that form a deviating part of the route. The deviating part also may be included in the output of the deviation detection component 510. It will be appreciated that the later analysis of a deviation route may be at the level of differing road segments, the deviating parts, or the entire traveled route.

In a variant implementation, the routing component 420 determines the recommended route 506 as a most frequently travelled route between the start location and the destination location in a set of traces. The set of traces may be obtained from a server such as the traces store 218. In this variant, the routing component 520 selects routes from the set of traces based on the start location, the destination location. Typically, routes with the same (or similar) start and destination locations are selected. However, it will be appreciated that two or more routes may be selected if they in combination pass through the start and destination locations. Additionally, the routes may be selected based upon any of: a time of day, and day of the week. The routing component 520 uses the selected trips to select the most frequently travelled route as the recommended route 506. The most frequent route or searches in the traces store may be requested from a navigation server infrastructure using an appropriate API. It will be appreciated that where the traces store 218 stores traces for two or more different modes of transport (or vehicle types) then it may be advantageous to select only the traces that use the same (or similar mode of transport (or vehicle type) as currently in use by the user. This enables more relevant (or accurate) routing preference to be obtained from such diverse route traces.

The deviation filter component 530 is configured to obtain the deviation route 508 and the recommended route 506. The deviation filter component 530 is configured to determine whether that the difference between the deviation route 508 and the recommended route 506 passes one or more filter criteria 531. In this way the deviation filter component 530 may be used to drop (or exclude from further analysis or discard) deviation routes 508 that are not indicative of a required change to the route parameters. Some examples of such situations are:

- The deviation route is due to a missed guidance instruction;
- The deviation route is due to a waypoint which was added due to a change of plans during a trip;
- The deviation route contains a deviation close to the start location or close to the destination location. These deviations occur when the user tries to safely enter or exit the road network. Near the destination location, the user may deviate to find a parking location. At the start location, the navigation client may not yet have sufficient information regarding the current location and the current direction of travel which may show as a deviation from the default route generated at the start location.
- The deviation route is due to a missed location coordinate or a location that is matched to a wrong road segment of the map. The deviation route also may not have received sufficient location probes due to a sensing device problem or a communication network problem.

The deviation filter component 530 enables the system 500 to only consider a deviation route 508 that is indicative of a required change in routing parameters 414. If the difference between the deviation route 508 and the recommended route 506 passes the filter criteria 531 of the deviation filter component 530, deviation route data 538 and recommended route data 536 are output for further processing. The deviation route data 538 and the default route data 536 of the output may comprise the differing road segments. In some implementations the deviation route data 538 and the default route data 536 may also road segments shared between the deviation route 508 and the recommended route 506. Typically, the deviation route data 538 comprises the deviation route 508, and the default route data 536 comprises the default route 506.

A route analysis component 540 (of which the figure 5a shows two instances 540a and 540b) is configured to receive the deviation route data 538 and the default route data 536 from the deviation filter component 530. The route analysis component 540 is configured to process the road segments in the deviation route data 538 and the default route data 536. The route analysis component 540 is typically configured to retrieve the attributes of each road segment from the electronic map for the road network in the map area. The route analysis component 540 is configured to generate a set of route characteristics for each of the road segments in the obtained route data based on the road attributes. The route analysis component 540 may then combine the route characteristics into overall route characteristics 542; 544 for each route. The overall route characteristics 542; 544 typically indicate the required routing parameters. The overall route characteristics 542; 544 are forwarded to a settings update component 550. The route analysis component 540 (with instances 540a, 540b) is described in more detail below.

The settings update component 550 is configured to receive (or obtain) the overall route characteristics 542, 544 of the deviation route data 538 and the default route data 536 from the route analysis component 540. A route deviation may be due to a requirement for the overall route characteristics 542 associated with the traveled route 538 or due to a deficiency in the overall route characteristics 544 for the avoided recommended route 536. The settings update component 550 is configured to determine a route characteristics difference between the overall route characteristics 542 associated with the traveled route 538 and the overall route characteristics 544 for the avoided recommended route 536. The overall route characteristics difference represents an indication for an adjustment of the routing parameters 414 for the user 201.

The settings update component 550 may be configured to use the route characteristics difference to update the routing parameters 414. The update process also may be deferred until several deviation routes 508 have been obtained. In such a variant, the update may be determined from an aggregated value (or values) of a plurality of sets of route characteristics differences. An aggregate route characteristics difference value may be obtained using a function such as a mean or an average function. In some implementations, the settings update component 550 may be configured to process the overall route characteristics 542; 544 upon receipt, and combine the route characteristics differences with previously received route characteristics differences for earlier deviating trips. For example, the settings update component 550 may combine the route characteristics differences with previously received route characteristics differences for earlier deviating trips using a moving average. Such previously received route characteristics differences and/or other data associated with deviating routes may typically be held in a non-volatile storage component of the settings update component 550.

*Route analysis*

The above description of the route analysis component 540 and the settings update component 550 use or determine data such as the route characteristics, the route characteristics difference, and the routing settings 414. In order to aid understanding a possible implementation is described mathematically below.

The route characteristics 542; 544, the route characteristics difference, and the routing settings 414 can be each be expressed as a respective set of $M$ values $\{v_1, ..., v_M\}$ or as a respective vector $\vec{v} = (v_1, ..., v_M)$ with dimension $dim(\vec{v}) = M$. Typically, each vector element $v_i$ represents a parameter of the routing parameters 414. The ordering of the vector elements typically is the same for the vectors representing the the route characteristics, the route characteristics difference, and the routing parameters 414. In this war the ordering of the respective vectors represents the correspondence between individual route characteristics, route characteristics differences, and routing parameters. It the elements have a different ordering, the operations on the data may involve some parameter permutations (re-ordering).

The route analysis component 540 receives or obtains the route data 536; 538 from the deviation filter component 530. The route data contains (or represents or corresponds to) a plurality of road segments. In some implementations, the route data may cover (or comprise or correspond to) the entire route. The route data alternatively may comprise a single road segment or a small number of road segments. The road segments in the route data may form a connected sequence of road segments. In some cases the order of the road segments in the route may be used for the processing of the route data in the route analysis component 540. The route data 536; 538 may be represented as a route $R$ containing $K$ road segments or $R = (r_1, ..., r_K)$. Each road segment $r_i$ has an associated attribute vector $\vec{a_i} = (a_{i,1}, ..., a_{i,N})$ containing $dim(\vec{a_i}) = N$ possible attributes. The attribute vector $\vec{a_i}$ has zero (or null) values for attributes that are not valid (or present) for the road segment $r_i$.

The following discussion uses the representations in the list below for the data in the route analysis component 540 and the settings update component 550:

- Route data: $R = (r_1, ..., r_K)$
- Road attribute vector: $\vec{a}_i = (a_{i,1}, ..., a_{i,N})$
- Route characteristics: $C = \{\vec{c}_1, ..., \vec{c}_K\}$ where $\vec{c}_i = (c_{i,1}, ..., c_{i,M})$
- Route characteristics difference: $\vec{d} = (d_1, ..., d_M)$
- Routing parameters: $\vec{s} = (s_1, ..., s_M)$

The figure 5b schematically illustrates a more detailed example of the route analysis component 540, discussed previously in relation to figure 5a. The route analysis component 540 comprises an attribute retrieval component 541, a map data store 541 and a route characteristics component 545.

The route analysis component 540 Is configured to receive route data 540r which may be represented as the sequence $R = (r_1, ..., r_K)$ as described above. The attribute retrieval component 543 is configured to access the map data store 541 that for each road segment $r_i$ holds the attributes to generate the associated attribute vector $\vec{a}_i = (a_{i,1}, ..., a_{i,N})$. This results in a sequence of attribute vectors $A = (\vec{a}_1, ..., \vec{a}_K)$ being obtained that may be output for processing in the route characteristics component 545.

The route characteristics component 545 may comprise (or have stored) a weighing (or correlation) matrix $W$ with dimensions $M \times N$. Each attribute vector $\vec{a}_i$ for a road segment $r_i$ is multiplied with the weighing matrix W to obtain a route characteristics vector $\vec{c}_i = W\vec{a}_i$ for the road segment $r_i$:

$$\begin{pmatrix} c_{i,1} \\ \vdots \\ c_{i,M} \end{pmatrix} = \begin{pmatrix} w_{1,1} & \cdots & w_{1,N} \\ \vdots & \ddots & \vdots \\ w_{M,1} & \cdots & w_{M,N} \end{pmatrix} \begin{pmatrix} a_{i,1} \\ \vdots \\ a_{i,N} \end{pmatrix}$$

Each element value $w_{q,r}$ of the weighing matrix $W$ may be pre-determined to provide encode (or represent or define) correspondence between the attributes of the road segment and the routing settings parameters. The value of the element value $w_{q,r}$ of the weighing matrix $W$ may, for example, be determined by generating many routes between two locations in which each route is obtained using different routing settings. When a generated route differs from the default route, this difference may then be associated with a difference in the routing parameters. As the difference in routes have associated routing settings, it will be appreciated that the weights of the weighing matrix that combine map attributes of differing road segments of the differing routes into the routing settings may be determined. The selection of weights of the weighing matrix $W$ may be further refined by manual adjustment or automatic optimization. A variant implementation for determining the weighing matrix $W$ is described shortly below.

The route characteristics component 545 is configured to combine the set of route characteristics vectors $C = \{\vec{c}_1,..., \vec{c}_K\}$ into the overall route characteristics $\vec{p}$. The combining may be done by way of a mean or average function,

$$\vec{p} = \frac{1}{K} \sum_{i=1}^{K} \vec{c}_i$$

such as . Alternatively, some other combining function may be performed on the set of route characteristics vectors $C$. For example, the overall route characteristics may be a vector sum (or weighted vector sum) of the route characteristics vectors of the route, such as $\vec{p} = \sum_{i=1}^{K} w_i \vec{c}_i$ . The weights may be based on the length or the average travel time for the road segment $r_i$ for each route characteristics vector $\vec{c}_i$. The route characteristics component 545 is configured to output the overall route characteristics $\vec{p}$ 540p.

In some examples the route analysis component 540 also may be configured to take account of other factors such as vehicle characteristics and user driving characteristics. These characteristics may be captured in a profile. The vehicle characteristics describe the type of vehicle and its driving capabilities. The user driving characteristics may describe: the style of driving (such as assertive, defensive, or other similar driving style related parameters); the compliance with traffic rules and regulations; and the percentile in the speed distribution for road segments.

The settings update component 550 receives overall route characteristics 542 for the recommended route and overall route characteristics 544 for the deviant route. The overall route characteristics 542 may be represented as the overall route characteristics vector $\vec{p}_1$ for the recommended route 506. The overall route characteristics 544 may be represented as the overall route characteristics vector $\vec{p}_2$ for the deviant route 508. The route characteristics difference then may be represented as the routing difference vector $\vec{d} = (d_1, ..., d_M)$ with $\vec{d} = \vec{p}_1 - \vec{p}_2$. The settings update component 550 may use the difference vector to update the routing parameters 414 (represented by the vector $\vec{s}$) to obtain updated routing settings vector $\vec{s}^* = \vec{s} + \vec{d}$. There are variant implementations for updating the routing settings 414 as described above. For example, the generation of the difference vector $\vec{d}$ may include non-linear aspects, such as weights that are conditional on other attribute values. Such more complex generation methods may use a software function that receives the attributes of the difference road segments and generates the difference vector $\vec{d}$ using combinations of these attribute values.

For example, an element of the overall routing characteristics may have two different values of 0.8 and 0.6 for two different routes. These values may indicate an estimate of a routing parameter value ranging from 0 (lowest probability or value) to 1 (highest probability or value). These two element values may represent the two route characteristics of respectively the travelled route 508 and the recommended route 506. The element value of 0.8 for the traveled route 508 is higher than the element value of 0.6 for the recommended route 506. This difference indicates a requirement for an increase in this routing setting component. In the example, the settings update component 550 may determine a difference for the element value (0.8 - 0.6 = 0.2) and adjust the corresponding element of the routing parameters 414 based on the different. The adjustment may be comprise adding the component value difference. Alternatively, the adjustment may involve earlier applied component value differences. In yet another implementation variant the component value difference may be scaled using a weight to deal with the frequency of trips with an indication for the determined component value difference.

*Further variant implementations*

The generation of the routing parameters 414 that are required for a user 201 may be implemented as described above. There are variant implementations that provide a different way to determine the required routing parameters 414 for a user 201.

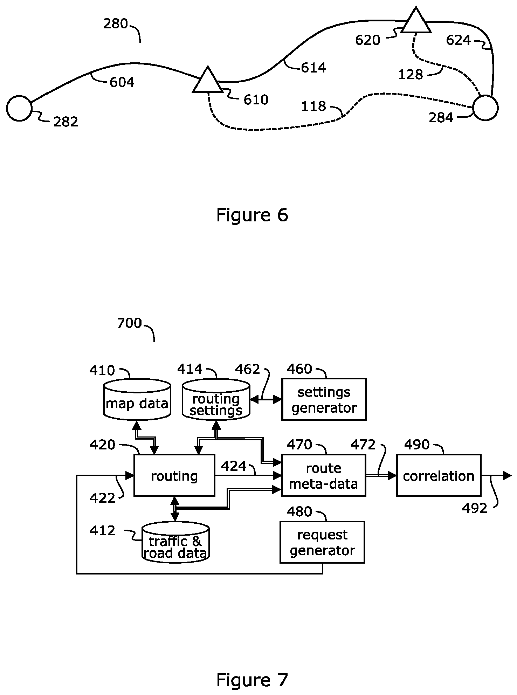

One such variant involves splitting the travelled route 508 into multiple subsets of the travelled route 508 and use these subsets as travelled routes in the routing parameter generation module 230. An example of such a travelled route is schematically shown in figure 6.

Figure 6 shows an example of a route 280 from a start location 282 to a destination location 284 with deviations. The travelled route 280 comprises the road segments 604, 614, and 624 (solid lines). The recommended route comprises the road segments 604 and 618. In this variant the routing component 420 is configured to generate the recommended route as the optimal route for a start location 282, the destination location 284 and the current routing parameters. The travelled route and the recommended route may be used for determining an update to the routing parameters in the manner discussed above, where the travelled route is used as the deviant route 508.

The figure 6 also shows that the routing component 420 generates a second recommended route when the vehicle continues travel on the not recommended road segment 614 at the node 610. The second recommended route has the destination location 284 but uses the node 610 as the start location. The second recommended route contains the road segments 614 and 628. The corresponding second travelled route contains the road segments 614 and 624. The second recommended route and the second travelled route may also be used to generate a further update to the routing settings in the manner discussed above, where the second travelled route is used as the deviant route 508. This example shows that a single travelled route can be split into several sub routes that can be used to determine adjustments to the routing settings using the systems and methods described above.

In a further variant implementation a deviation from the recommended route at a deviation node may trigger determining an update for the routing parameters using the original recommend route 604; 618 and a virtual travelled route 604; 614; 628. A deviation node is a node at which the user deviates from the recommended route by selecting a non-recommended road segment. In figure 6 the node 610 and the node 620 are deviation nodes. In this case the virtual travelled route comprises the initial route 280 from the original start location 282 to the deviation location 610 and the adjusted recommended route 614; 628 from the deviation location 610 to the destination location 284. With this implementation, each deviation from a recommended route may be used to update the routing parameters.

For ease of understanding the following example is provided with reference to the routes shown in figure 6. In this example the travelled route comprises the road segments 604, 614, and 624 (solid lines). The recommended route comprises the road segments 604 and 618. There are three routing parameters: shortest (travel) time, shortest (travel) distance, and lowest traffic density. The routing parameters are given real values in the range 0.0 to 1.0 which indicate the relative importance of the requirement of the parameters (here 1 is most important and 0 would be not important). The recommended route 604, 618 represents a route that is both shorter and faster than the travelled route 604, 614, 624, even though the recommended route has some congestion as reflected in its higher traffic density.

The systems and methods above use these differences between the travelled route and the recommended route to adjust the routing parameters. The adjustments increase value of the lowest traffic density parameter relative to the values for the shortest time parameter and the shortest length parameter. The example may trigger a change in each of the three parameters of the routing preferences. Depending on the implementation, the routing preference update may involve fewer routing parameters. For example, a change may be below a threshold, or it may be offset by updates determined from earlier deviations.

An example implementation of a correlation determination system 700 is schematically illustrated in figure 7. The system 700 may be used to determine the correlation matrix $W$ as used is the systems and methods described above.

The correlation determination system 700 comprises (or is connected to) the routing component 420 as described previously. As shown in figure 7 the routing component 420 is connected to the map data 410 and the routing parameters 414. The routing component 420 may be connected to the traffic and road data 412 as described previously. The system 700 comprises a request generator component 480 that determines routing input data 422 as discussed previously. Typically, the routing input data comprises a start location and a destination location. the routing input data may also comprise a start time (time of day, day of the week). The routing input data 422 is provided to the routing component 420.

The system 700 is also connected to (or comprises) a parameter generator component 460 that is arranged to generate a plurality of sets of routing parameters 462. The routing parameters 462 differ from each other. A set of routing parameters may differ from another set of routing parameters in respect of the values of one or more routing parameters. As will be understood in some cases two sets of routing parameters may only differ in respect of the value of one routing parameter. Equally in some cases a set of routing parameters may differ from another set of routing parameters in respect of the values of all of the routing parameters.

The routing component 420 is arranged to generate a recommended route 424 for the received routing input data 422 request according to one of the plurality of sets of routing parameters 462 and optionally the traffic and road data 412. The traffic and road data 412 may be: obtained from recorded information; or reconstructed from historic route data; or obtained from live sources.

A route meta-data component 470 is arranged to receive (or obtain) the recommended route 424 and the corresponding routing parameters. The route meta-data component 470 may also be arranged to receive the corresponding traffic and road data 412.

It will be appreciated that the above components are arranged to generate recommended routes for a number (often all) of the sets of routing parameters of the plurality of sets of routing parameters. In this way recommended routes may be gathered (or received) by the route meta-data component for multiple different sets of routing parameters.

The route meta-data component 470 is arranged to select route variants that are indicative of one or more parameter values of the routing settings. For example, the route meta-data component 470 may identify two (or more) differing routes where the respective sets of routing parameters only differ by a single value. In such a case the difference between the two routes (or route variants) are determined as indicative of the change in the differing routing parameter. As such the route meta-data component 470 may be arranged to merge routing parameters such that output routings parameters contain indications of parameters values that result in a specific route.

It will be appreciated that the route meta-data component 470 may therefore for each routing input data 422, generate (or identify) a set of different routes and merged routing settings.

The request generator component 480 may be arranged to generate further instances of different routing input data 422. Said generation maybe with the aim of increasing the coverage of the road network. For example, further instances of different routing input data 422 may be generated with start and/or destination locations where few (or no) recommended routes have traversed previously. In this way the road network may be effectively sampled.

The correlation component 490 is configured to receive a plurality of recommended routes and the corresponding routing parameters from the meta-data component 470. The correlation component 490 is configured to identify (or determine) one or more correlations between individual route parameters and one or more route characteristics, based on the received plurality of recommended routes and the corresponding routing parameters.

Additionally, or alternatively the correlation component 490 may be arranged to processes the different road segments of a route 424 to determine a correlation between the road segment attribute values and the routing parameters. The correlation component 490 may be arranged to generate (or determine) the weighing matrix $W$ based on the correlation between the road segment attribute values and the routing parameters.

For example, the correlation component 490 may have access to a large set of recommended routes and the associated routing parameters. The correlation component 490 may also have access the road attributes. It will be appreciated that the correlation may work in many different ways. In one example the correlation component 490 finds all occurrences of a given road segment in the recommended routes and obtains the associated routing parameters. Iterating over all included road segments gives, for each attribute, a number of times a road segment with that attribute has been recommended using a particular routing parameter. This can establish a probability for a routing parameter being present for a specific attribute. The skilled person would appreciate that alternative mechanisms taking into account sequences of road segments and the associated routing parameters may also be used. The road and traffic data also may be used in the analysis of the recommended routes in the presence of congestion or (partially) closed roads.

*Machine learning variants*

As discussed above in relation to figure 2a the routing parameter generation module 230 may be arranged to train a machine learning algorithm (or classifier or model) to determine updated routing parameters. In a variant of the system 700, the correlation component 490 may train a machine learning algorithm using the recommended routes and the associated routing parameters (or merged routing parameters). The machine learning algorithm may be trained to directly predict (or determine) the routing parameters for a set of traces (e.g., the trips made by a single user). In this way it will be appreciated that a supervised learning approach, where the recommended routes represent the training data, labelled by the corresponding routing parameters, may be used to train the machine learning algorithm (or classifier). Typically, a multi-label classifier approach is used. Suitable multi-label classifier machine learning approaches (or systems) that may be used include: neural network algorithms; decision tree algorithms (such as MMC or MMDT); k-nearest neighbor algorithms; and so on.

The system 700 may be configured to generate the training data for use in the machine learning system of the correlation component 490 using iterations over the sets of routing setting in the plurality of sets of routing settings. Additionally, the system 700 may be configured to generate the training data for use in the machine learning system of the correlation component 490 using iterations over and over a sequence of different routing input data 422. There also may be an iteration over the traffic and road data. Depending on the machine learning system employed, the route meta-data component may be omitted (or may be configured to simply pass on all data received from the routing component 420, the routing settings 414, and the traffic and road data 412).

In yet another variant the machine learning system of the correlation component is configured to train a machine learning algorithm (or classifier or model) to determine (or estimate) probabilities for the parameter values of the routing settings 414 given the set of road segments $R$ and the associated set of attribute vectors $A$. This may be thought of as comprising determining the routing difference vector $\vec{d}$ as described above. The determined probabilities for the parameter values of the routing settings 414 may be used to update the routing settings vector $\vec{p}$. For example, the trained machine learning algorithm may provide a probability for a Boolean parameter value being true or false. When the probability exceeds a threshold value, the routing settings 414 are updated to use the new value.

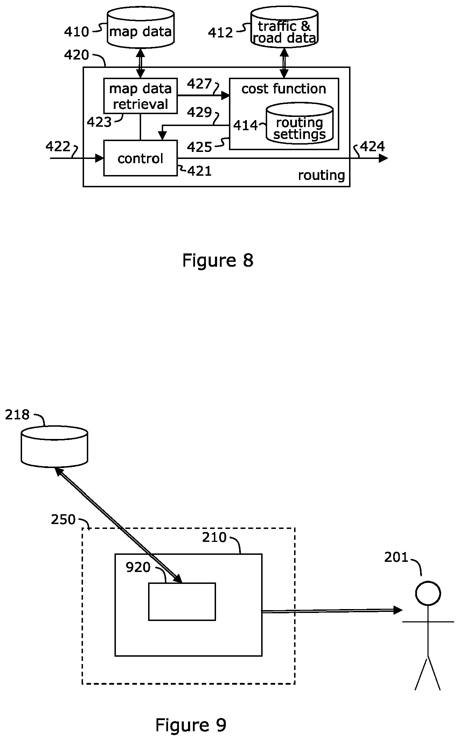

It will be appreciated that due to the adaptation or generation of the routing settings based on observed driving of the driver (user), there no longer is a need for a user interface to inspect or modify the routing settings. This is a benefit as it simplifies the software implementation of the navigation client. The removal of the user interface for the routing settings also enables a further variant in which the functionality obtained using the routing settings is moved into the routing component 420. Figure 8 schematically illustrates a variant of the routing component in which the functionality obtained using the routing settings is part of the routing component 420.

The figure 8 shows further details of the routing component 420 comprising a control component 421 that is configured to manage the generation of the recommended route 424 for the routing input data 422. The control component 421 is configured to use the map data retrieval component to obtain map data (such as road segments and junctions) and associated attribute data. The routing component also comprises (or defines) a penalty (or cost or objective) function component that determines the cost associated for including a road segment in a route.

The cost function component 425 is configured to receive (or obtain) the attributes 427 from the map data retrieval component 423. The cost function component 425 is configured to use the attributes 427 associated with a road segment and the routing settings 414 to determine a cost 429 for traversing the road segment (or for including the road segment in a route). The cost (or penalty) 427 typically comprises one or more functions of the attributes 427 and the parameters of the routing parameters. In an example the cost comprises the traversal time which may include a turn time to traverse a road segment. The traversal time can be calculated from the length and the average speed of the road segment. The routing parameters may comprise weightings for one or more components of the cost. Additionally, or alternatively the routing parameters may comprise thresholds for one or more components of the cost. The cost may comprise any one or more of: traversal time; a scenic score; a safety score; a routing diversity score (i.e. a score indicating the number of alternative routes accessible from it, so as to more easily avoid roadworks or congestion through re-routing); and so on.

The figure 8 also shows that the cost function component 425 may be configured to use the road and traffic data 412 in determining the cost 429. For example, when calculating a travel time for a road segment, the traffic and road data may provide the current speed of travel for the road segment. The cost function component 425 provides the cost 429 associated with traversing the road segment or the node to the control component 421. The control component 421 is configured to obtain the relevant road segments and associated costs in a map area to determine the optimal (or recommended) route 424.

The routing component 420 as shown in the figure 8 comprises (or has stored) the routing settings 414. Including the routing settings 414 in the cost function component 425 removes communication overhead. Additionally, it allows integrating the automatic adjustments of the routing settings into the cost function component 425. This variant implementation uses the travelled route data to adjust the calculation of the cost associated with the attributes in the map data. This is advantageous when using machine learning techniques discussed above. In particular the machine learning algorithm may be trained to generate the cost directly for traversing a road segment in the road network.

The integration of the travelled route analysis into the routing component 420 or the cost function component 425 makes it possible to provide routing settings that adapt the costs depending on the details of a route or depending on a specific start and destination location. This integration amounts to the support of more extensive the routing parameters that is needed for fine-grained control over the generated routes. Such extensions of the routing parameters are not possible to manage using the traditional user interface-based implementations for presenting and updating the routing parameters. An increase in the number of parameters in the routing parameters may require the route characteristics component 540 and the settings update component 550 to also process the travelled route (start, destination, time, and route) in the method to update the routing settings 414.

*Vehicle detection*

In the foregoing discussion it will be appreciated that one or more of the routing parameters may comprise or be determined by the mode of transport of the user. In particular, a navigation client (or guidance system) can provide improved functionality based on the properties of the vehicle that the navigation client is associated with. Certain modes of transport (or types of vehicles) may be prohibited from certain road segments. A road segment may have a physical restriction, such as a size or weight restriction that means certain classes of vehicle may be unable to safely travers the road segment. Certain road segments may prohibit certain modes of transport as unsafe. For example, freeways or motorways may prohibit pedestrians or pedal cyclists from traversing them. Similarly, bridleways or cycleways may prohibit motorized vehicles to ensure the safety of the hose riders or cyclists using them

This is typically achieved by selecting a mode of transport in the settings of the navigation client. This works well for navigation clients with long term associations with a vehicle (e.g. a built in navigation client). For mobile navigation clients each change of transport mode by the user may need a switch the in the settings to reflect the new mode of transport (car, public transport, walking, cycling, etc). An automated system for determining vehicle type (or mode of transport) is provided by the systems and methods described below. This is advantageous in that it may be used to ensure the most up to date vehicle type is used where the navigational client is switched between vehicles frequently. Also it enables a greater granularity of options in vehicle types, with more specific routing restrictions, to be used. This enables more optimal routes to be generated for each vehicle type, whilst removing the risk of the user selecting an inappropriate or incorrect vehicle type from a large number of options.

Figure 9 schematically illustrates a variant navigational system 210 (such as any of the navigational systems described above). The navigational system 210 comprises a vehicle detection module 920. As discussed previously, the navigational system 210 may be connected (or communicatively interfaced) with a traces store 218.

The vehicle detection module 920 is configured to obtain route data. Typically, the route data corresponds to a completed portion of a current route of the user. The completed portion of the current route comprises one or more road segments traversed by the user to reach the current location of the user.

For example, a user currently traversing a route from a start location to a destination location may be currently located at an intermediate point along the route from the start location to the destination location. The route data obtained may related to all, or part of, the route that the user took between the start location and the current (intermediate) location. In some cases the completed portion of the route which the route data corresponds to is all of the route between the start location and the intermediate location. However it will be appreciated that in some cases the completed portion of the route to which the route data corresponds, may only be a part of the route between the start location and the intermediate location. Indeed, in some cases the completed portion of the route to which the route data corresponds may only be a single road segment, such as the road segment that the user is currently located on (or is currently traversing).

The route data may additionally, or alternatively correspond to one or more previously travelled routes 280. The previously travelled route 280 is a route previously travelled by the navigational system, typically with the current user. As discussed previously a previously travelled route 280 comprises one or more road segments 286.

The route data (or route traces) may be obtained from the traces store 218 as discussed previously. The route data corresponding to the completed portion of a current route is typically obtained directly from the navigational system 210. However, it will be appreciated that any of the route data may be obtained from the traces store 218 or the navigational system 210 or any combination thereof.

The vehicle detection module 920 is configured to determine, using the route data, the mode of transport of the user of the navigational system. The identification is based at least in part on attributes of road segments of the completed portion of the current route. Additionally, or alternatively the identification is based at least in part on attributes of road segments of the one or more previously travelled routes. Example modes of transport include any of: walking; cycling; horse riding; public transport; driving; skateboarding; rollerblading; sailing; and flying. Examples of how such identification may be carried out are described shortly below.

The vehicle detection module 920 may also be arranged to receive or obtain sensor data from one or more sensors on the vehicle associated with the navigational system and/or the navigational system itself. It will be appreciated that the navigational system may be connected (or connectable) to the vehicle such that sensor data from the vehicle is accessible to the navigational system. The navigational system may be connected to the vehicle via a suitable data connection or network. Examples of suitable data connections include wireless connections (such as WiFi; cellular; LTE, or other such connections) and/or wired connections (such as ethernet, USB, CANBUS, or other such connections).

The sensor data may comprise any of: a speed of travel of the navigational system; an acceleration of the navigational system; acoustic noise levels at the navigational system; electromagnetic signals detected at the navigational system; vibration detected at the navigational system; timestamped location data for the navigational system; light sensor data; camera data. The sensor data may also comprise sensor data corresponding to the completed portion of the currently ravelled route. Additionally, or alternatively the sensor data may correspond to one or more previously travelled routes.

The vehicle detection module 920 may be arranged to identify the mode of transport based at least in part on the received sensor data.

In determining the mode of transport the vehicle detection module 920 may determine the vehicle type of the vehicle in use by the user. Examples of vehicle types include any of: a car; a light goods vehicle; a heavy goods vehicle; a motorcycle; a bicycle; a bus; an articulated vehicle; a skateboard; rollerblades; a scooter; an e-scooter (or electric scooter); an e-skateboard (or electric skateboard); a boat (such as a sail boat or a motorboat); a ferry; and an aeroplane. Additionally, or alternatively in determining the mode of transport the vehicle detection module 920 may determine the power source of the vehicle. For example, whether the vehicle uses a: petrol internal combustion engine; a diesel petrol internal combustion engine; electric power; hybrid power (i.e. a combination of electric power and an internal combustion engine); manual (or pedestrian) locomotion (such as a bicycle).

The vehicle detection module 920 may be arranged to update the routing parameters based on the identified mode of transport. For example, the routing parameters may specify directly the mode of transport. In such a case the vehicle detection module 920 may update the mode of transport parameter (or parameters) accordingly. Equally, one or more routing parameters may be indirectly affected by (or be partially dependent on) the mode of transport. It will be appreciated that such indirect effects (or dependencies) may be pre-determined. For example, weight and or size limits associated with different classes of vehicles may be known or pre-programmed. Similarly, functional road classes usable (or not usable) by a vehicle class may be known or pre-programmed. The vehicle detection module 920 may update such dependent routing parameters based on the pre-programmed or pre-determined relations between the vehicle class (or mode of transport) and the routing parameters.

As part of determining the mode of transport the vehicle detection module 920 may calculate (or identify or otherwise determine) one or more vehicle properties from the completed portion of a current route (and/or previously travelled routes). For example, the vehicle detection module 920 may calculate one or more properties regarding (or specifying) the size of the vehicle. It will be appreciated that the length of a vehicle may be determined from the vehicle's turn radius. Parts of the road network may require a smaller turning radius. When a vehicle has travelled a road segment with an attribute indicating the presence of a bend of a certain radius a maximum vehicle length may be determined (or inferred) based on this.

In a similar manner, the width of a vehicle may be inferred (or determined) from the presence of road segments in the completed portion of a current route (and/or previously travelled routes) having attributes indicating a width restriction. In this case a maximum width of the vehicle may be determined (or inferred) based on this. It will be appreciated that the same considerations may be applied to the height of the vehicle. Traversing road segments with a given height restriction may be used to set an upper limit on the height of a vehicle.

The size of the vehicle is related to the mass (or weight) of the vehicle. A large size for a vehicle typically indicates a large mass for the vehicle. As with the other size properties (such as length or width or height), a maximum weight for the vehicle may be determined based on the vehicle having traversed a road segment with a weight restriction attribute.

A vehicle class (or regulatory class) or vehicle type may be determined as part of the vehicle properties. In particular, the vehicle class (or regulatory class) or vehicle type may be determined based at least in part on a regulatory status (or road type restriction) attribute of one or more road segments in a previously travelled route. For example, the traffic regulations may restrict access to road segments or specific turns to vehicles with a specific regulatory status (e.g., taxi, vehicle sharing service, public transport, emergency services, police). This means that such restricted access road segments or specific turns may provide an indication of a regulatory right being associated with a vehicle.

The energy source (or power mode) of the vehicle (or mode of transport) may be determined as part of the vehicle properties. The energy source may eb thought of as specifying how the motion of the vehicle is achieved (or powered). Example energy sources include any one or more of: human power, electric power, petrol, liquified petroleum gas (LPG), alcohol, diesel, and hydrogen. The energy source is used to power the vehicle (or mode of transport). As some road segments may be reserved for vehicles with specific types of energy sources (e.g. highways, bicycle paths, pedestrian zones, horseback trails) the power source may be determined based on the attributes of previously travelled road segments.

It will be appreciated that as energy is consumed during travel with a vehicle, the energy storage may require renewing at a specific facility (or point of interest) such a gas station, charging station, or energy supplying infrastructure like, but not limited to, a Shaped Magnetic Field in Resonance (SMFIR) system. As such, the energy source of a vehicle may be determined based on stops at such facilities (or points of interest) in the completed portion of a current route (and/or previously travelled routes).

As part of determining the mode of transport the vehicle detection module 920 may calculate (or identify or otherwise determine) one or more vehicle properties from the sensor data. It will be understood that some vehicle properties may be determined based on both sensor data and the completed portion of a current route (and/or previously travelled routes). For example, the weight of the vehicle influences (or affects) the acceleration of the vehicle, or deceleration (or braking rate) of the vehicle. The weight of the vehicle also influences the maximum speed of the vehicle. Similarly, the vehicle class (or vehicle type) may limit the maximum speed of the vehicle and/or indicate a range of possible acceleration and/or deceleration rates. The energy source may also affect the maximum speed of the vehicle and/or indicate a range of possible acceleration and/or deceleration rates.

As such, the vehicle detection module 920 may calculate any of: a vehicle weight, a vehicle type, a mode of transport, a power source based on sensor data. Sensor data, such as location data, may place the vehicle at or near such an energy renewal facility. Therefore, an energy source also may be obtained from sensor data indicating the time spent at a relevant location.

It will be appreciated that typically the vehicle detection module 920 is configured to determine the vehicle properties, and thereby the vehicle type (or mode of transport) based on various combinations of the sensor data and the previously travelled routes. For example, the step of determining may comprise calculating one or more progress indicators for a completed portion of a current (and/or a previously travelled route) based on the route data (which may include sensor data). Such progress indicators may comprise any of: a (minimum) turn radius; a speed of travel; a time of travel; a direction of travel; an (maximum) acceleration; a braking distance; a vibration pattern; a noise (or sound) pattern; and so on.

For example, mobile phones often use accelerometers and other sensors to count (or log) steps taken by a user. In the same way a walking mode of transport may be detected by an appropriate collection of sensors. Similarly, a bicycle has an associated motion pattern due to operation of the pedals that may be detected by sensors in the navigation client to indicate use of a bicycle.

In another example it will be appreciated that sounds indicative of an internal combustion engine (such as induction roar and/or exhaust noise) may be detected in order to determine that an internal combustion powered vehicle is in use. Similarly, sounds indicative of an electric motor (such as coil whine and/or gear whine) may be detected in order to determine that an electric vehicle is in use.

It will also be appreciated that some navigational clients are mounted to the vehicle which enables direct detection of signature vibration patterns for that vehicle.

In a variant implementation, the vehicle detection module 920 also may use related sensor data representing an environment of the navigation client to determine the most likely vehicle type. Examples of such sensor data include one or more of sound, vibration, images, light intensity, or EM/RF signals. The probe data or trace data may comprise such sensor data. Alternatively, the navigation client may acquire the sensor data as part of the vehicle type determination process. For example, the vibration levels for the vehicle may indicate that the user of the navigation client is walking (e.g. as used by a step counter). Noise levels also may indicate a motor sound that is typical for certain engine types associated with trucks.

Equally, it will be appreciated that the vehicle properties above may be determined as respective probabilities for a plurality of possible modes of transport (and/or vehicle types). In this way the vehicle detection module 920 may determine the most likely vehicle type (or mode of transport) from the most likely set of vehicle properties.

The probabilities for the plurality of possible modes of transport (and/or vehicle types) may be updated as the user continues to traverse the current route. This may be thought of as an iterative process. As such, the vehicle detection module 920 is configured to obtain further route data (like the route data discussed above in relation to the completed portion of a current routes) as more of the current route is completed (or travelled or traversed) by the user. The further road segments now traversed by the user may be used as set out above to update the existing probabilities for the plurality of possible modes of transport (and/or vehicle types). Equally it will be appreciated that the further routing data may, in a similar manner, include further sensor data which may be used to update the probabilities. As such, the accuracy of the probabilities should improve as the user travels along the route resulting in an improved identification of the current mode of transport (or vehicle type).

In some cases when the user begins the route the probabilities may be set to initial values based on previously travelled routes in the manner described above. These probabilities may then be iteratively updated based on the current route as the user travels along the route. Of course, it will be appreciated that the probabilities may be initialized in a number of ways including any of: according to a mode of transport (or vehicle type) previously selected by the user; according to default values pre-determined by the navigational system (such as a most popular mode of transport across all users); according to a start location of the user; and so on.

In an example, a set of probabilities each representing a respective vehicle type (and/or mode of transport) may be updated as the route is traversed. A trip may start walking to a vehicle. As such, walking may be assigned a higher probability (than say a car or a bicycle) based on various determinations discussed above. As later determinations are made based on later data indications of a relatively high speed of travel may be obtained. In response the probability of walking would be reduced and the probabilities for vehicle types with a faster travel speed woud be increased. Similar probability adjustments can be made on the basis of other vehicle type indicators. In this way as the journey progresses a most probable vehicle type (or mode of transport) will be determined.

Table 1 - example mode of transport (or vehicle) properties

| | Size | Speed (kph) | Road class | Mass (kg) | Power (W) |
|---|---|---|---|---|---|
| Pedestrian | Very small | 1-7 | sidewalk | 80 | 50-120 |
| Bicycle | Small | 3-14 | cycling path, street | 95 | 120-180 |
| Motorized bike | Small | 5-17 | cycling path, street | 110 | 300-600 |
| Motorized scooter | Small | 5-17 | street, road | 120 | 400-800 |
| Motorcycle | Small | 10-50 | street, road, highway | 180 | 7000-100000 |
| Car | Medium | 10-50 | street, road, highway | 2000 | 10000-150000 |
| Taxi | Medium | 10-40 | street, road, highway | 2000 | 10000-100000 |
| Police car | Medium | 10-55 | street, road, highway, bus lane | 2000 | 30000-150000 |
| Light truck | Large | 10-33 | street, road, highway | 6000 | 30000-200000 |
| Truck | Very large | 10-33 | street, road, highway | 9000 | 30000-400000 |
| Bus | Very large | 40-120 | street, road, highway, bus lane | 9000 | 30000-60000 |
| Ambulance | Large | 40-180 | street, road, highway, bus lane | 6000 | 20000-60000 |

Table 1 shows a set of example properties for various vehicle types to aid understanding. It will be understood that the values and ranges given are exemplars and in implementation the skilled person would choose appropriate ranges based on the vehicle types that the system is to identify. Standards such as ISO 3833:1977 which aim to define road vehicle types are well known to the skilled person and may be consulted. As indicated in the properties of the different vehicle types may differ substantially. These differences typically result in vehicle type specific driving behavior. The sensor data and/or the previous routes for a vehicle allow an indication of the vehicle type to be determined as discussed previously.

For example, the average speed as recorded in the sensor data or the previously travelled routes may indicate that it never exceeds 5.4 kph, which corresponds to an average speed associated of a pedestrian.

In another example, the trace data or probe data may have a period with an associated average speed of 10 kph. This may indicate a bicycle as the more probable vehicle type although other vehicle types of the table (pedestrian, motorized bike, motorized scooter) also are consistent with this recorded average speed. In such a case, the previously traveled routes may provide further evidence on the vehicle type that best matches the probe data or the trace data. Such further evidence might be a previously traveled route comprising a road segment with a cycling only attribute, which substantially reduces the probability of the pedestrian vehicle type and the motorized bilk/scooter types.

In yet another example, the average speed and the attributes associated with the road segments matching the sensor data or the trace data may correspond to two or more vehicle types (e.g. car and light truck). In such a case, the rate of change for the speed (acceleration) associated with the probe data or the trace data may indicate a higher probability for one of the two vehicle types. For example, when the rate of change is relatively slow it may increase the probability of the heavier or lower power vehicle (i.e, the light truck).

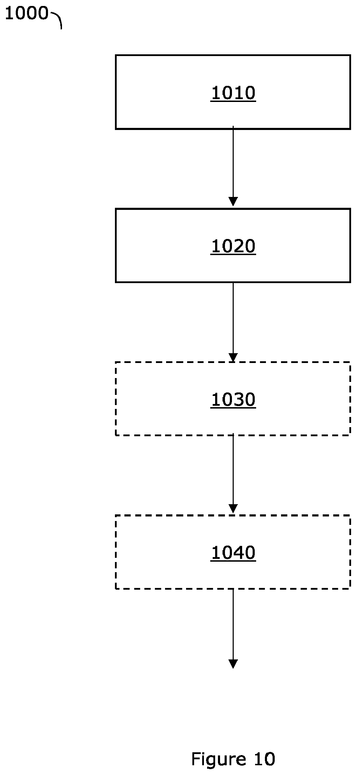

Figure 10 is a flowchart illustrating a method 1000 that may be performed by the variant navigational system 210 of figure 9 detect the mode of transport of the user.

At a step 1010, route data is obtained. Typically, the route data corresponds to a completed portion of a current route of the user. The completed portion of the current route comprises one or more road segments traversed by the user to reach the current location of the user.

The route data may additionally, or alternatively comprise one or more route traces of the previously travelled routes. Examples of route traces and how they may be obtained are described previously above in relation to the navigational system in figures 2 to 9. Additionally, or alternatively the route data may comprise global positioning data for the completed portion of a current route and or the previously travelled routes. Such global positioning data may be determined (or generated) by a global positioning sensor (GNSS) carried by the user (or in or part of the user's vehicle). The global positioning data characterizes (or follows) the route taken by the user. Here, as part of the step 1010, a route trace for the completed portion of a current route or a previously travelled route by be generated based on the global positioning data. In particular, by matching the global positioning data to a map of possible road segments, such as the map data available to the navigational client as described earlier.

The route data may comprise sensor data as described above in relation to figure 9.

At a step 1020 a mode of transport of the user of the navigational system is determined (or identified) based on the route data. As discussed above the identification is based at least in part on attributes of road segments of the completed portion of a current route and/or one or more previously travelled routes. The identification may also be based on (or depend upon) the sensor data. The step 1020 may comprise calculating one or more progress indicators for the completed portion of a current route and/or a previously travelled route based on the route data. Here the identification is based at least in part on the determined progress indicators. Progress indicators may be (or comprise) any one or more of: a (minimum) turn radius; a speed of travel; a time of travel; a direction of travel; an (maximum) acceleration; a braking distance; and so on.

At an optional step 1030, the navigational system 210 is enabled to generate recommended routes suitable for the identified vehicle (or mode of transport). As discussed above various road segments may be unsuitable (or incapable of being traversed) by particular modes of transport (or vehicles). The navigational system is configured to generate the route such that it may be traversed by the identified mode of transport (or vehicle). As such, the step 1030 may comprise identifying one or more routing restrictions based on the determined mode of transport (or vehicle). Examples of such routing restrictions include any or more of: a minimum height restriction allowed on a recommended route; a minimum and/or maximum speed restriction allowed on a recommended route; a minimum weight restriction allowed on a recommended route; a minimum width restriction allowed on a recommended route; or a road type restriction. It will be appreciated that such restrictions may be represented in one or more of the routing parameters discussed herein above. As such, the step 1030 may comprise updating the set of routing parameters based on the identified vehicle (or mode of transport). For example, the routing parameters may specify directly the mode of transport. In such a case the step 1030 may comprise updating the mode of transport parameter (or parameters) accordingly. Additionally, or alternatively, one or more routing parameters may be indirectly affected by (or be partially dependent on) the mode of transport. It will be appreciated that such indirect effects (or dependencies) may be pre-determined. The step 1030 may comprise updating such dependent routing parameters based on the pre-programmed or pre-determined relations between the vehicle class (or mode of transport) and the routing parameters.

At an optional step 1040, a route between an initial location and a requested end location is generated by the navigational system 210. The route is generated so as to be suitable for the mode of transport (or particular vehicle) identified in the step 1020. Where the step 1030 comprises updating the set of routing parameters based on the mode of transport (or vehicle) the step 1040 may be carried out by generating, based on the updated set of routing parameters, a route between the initial location and the requested end location, in any of the ways described previously above with reference to figures 2 to 9. However, it will be appreciated that the step 1040 may be carried out by the navigation system 210 taking into account the identified routing restrictions directly. For example, the navigation system 210 may discard (or not consider or not include) any road segments that have attributes contravening (or that are not in accordance with) any of the route restrictions. Alternatively, the navigation system 210 may generate a number of routes and discard the routes that contravene any of the route restrictions.

As discussed previously it will be appreciated that the navigational system 210 may also provide navigational guidance to the user 101 for following the generated route, based on the generated route and a current location of the user. In this way it will be understood that the navigational system 210 is typically arranged to detect the road segment currently in use by the user (whether the road segment is part of recommended route or not). The navigation system 210 may be arranged to identify if said road segment contravenes one of the routing restrictions (or is otherwise unsuitable for the determined mode of transport), and in response providing an alert or warning to the user. Such an alert may be in the form of any one or more of: an audible alert; a visual alert; haptic feedback; and so on.

The step 1030 and the step 1040 are presented as optional since, as it will be appreciated, they may be carried out separate to the steps 1010 and 1020 of identifying the vehicle type (or mode of transport). For example, the steps 1010 and 1020 may be carried out periodically, or infrequently, to take account of changes of vehicle for the user. This may be the case where the user as a single navigational system 210 that is transferred between vehicles.

Alternatively, the method 1000 may be carried out part way through a user's journey. In this case the previously travelled route may be a previously travelled section of a current route. Here the start location of the step 1040 may be the current location of the user, and the steps 1030 and 140 may be carried out in response to a change of vehicle type being determined in the step 1020. As such in this scenario the method may result in the previously recommended route being updated (or changed) in response to detecting a change of vehicle type. It will be appreciated that this ensures that the recommended route remains suitable for the current vehicle type.

In another variant implementation, the electronic map may have point of interest locations in the map that are associated with a change of travel modality (or vehicle type). Such points of interest may include any of: a parking facility near a public transport station, a rental vehicle return location, etc. This information may be used in improving the response time for a change in vehicle type. For example, the method 1000 may be automatically started a set distance (or time) after such a point of interest has been visited. It will be understood that sufficient time or distance will be required to ensure that enough route data is acquired. This can be varied dependent on the desired accuracy, and/or the number of possible modes of transport (or vehicle types) that can be identified. Similar changes of vehicle type can be identified by detecting manoeuvres associated with (street) parking.

It will be understood that an accurate vehicle type of the sort provided by the above system and method is advantageous as it can prevent users of the navigation device being recommended routes that are not possible (crossing a street/bridge/tunnel that is too narrow) or dangerous (pedestrian walking on a high-speed motorized vehicle road). Of course, in some cases, the vehicle type may not reasonably correspond to any vehicle type. This may occur when there are errors in the sensor data or the trace data resulting in strange sequences of road segments or in high speeds of travel. Such trace data or sensor data may then be marked as comprising errors.

The automatic detection of a vehicle type also reduces the number of user interfaces for operating a navigation client. The implementation of the automatic detection may be in the cloud infrastructure or in the navigation client itself. Preferably, however, the method 1000 above is carried out locally on the navigational client (or system). This has the advantage that the navigational client may update the vehicle type even when not connected to a data network 9such as the Internet). As such, the updating of the vehicle type may be more responsive to changes to the vehicle type and the likelihood of impossible or dangerous routes being recommended is reduced.

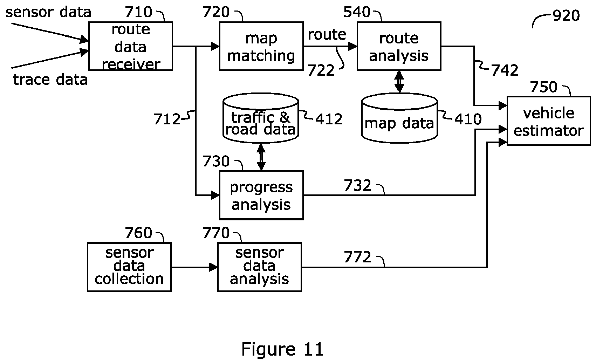

Figure 11 schematically illustrates an example variant implementation of a vehicle detection module 920 such as that shown in figure 9 above.

The vehicle detection module 920 is arranged to obtain (or receive) route data and processes the data to determine the most likely vehicle type. The route data may comprise sensor data (such as a sequence of GNSS positions) and/or trace data (such as a sequence of connected road segments in an electronic map of a road network).

The route data receiver 710 is configured to obtain (or receive) route data comprising location data (a GNSS location or a map matched location) in which each location information is associated with information describing a timestamp, a direction of travel, or a speed of travel. The route data receiver 710 is configured to send the route data 712 to a map matching component 720.

The map matching module 720 is arranged to convert the route data 712 comprising GNSS location data into one or more previously travelled routes 722. A previously travelled route 722 is a sequence of connected road segments in an electronic map of a road network, typically stored as a route trace. The conversion of the map matching component 720 is not needed when the route data receiver 710 obtains route data that already is in the form of a route trace or a previously travelled route.

Figure 11 shows two analysis components: a route analysis component 740 and a progress analysis component 730. The functional diagram of the route analysis component 740 is equivalent to the route analysis component 540 with the difference that it uses a different subset of attributes associated with the road segments from the route data. The attributes of interest typically are directly or indirectly related to a vehicle type (e.g., Functional Road Class, road usage restrictions). The route analysis component is configured to combine these attributes into route characteristics 742.

The progress analysis component 730 is configured to use the route data to determine one or more progress indicators 732 (such as a time of travel, a direction of travel, a speed of travel, an acceleration, or a turn radius). The progress analysis component 730 is usually configured to use traffic data for reference purposes. The progress indicators 732 are directly or indirectly related to the vehicle properties that determine most likely range for the speed of travel range, acceleration, breaking and turn radius.

A vehicle type estimator component 750 is configured to obtain the route characteristics 742 and/or the progress indicators 732 (individually or in combination) to determine the vehicle type that best matches the trip data.

Figure 11 also shows a variant implementation in which the vehicle detection module 920 comprises a sensor data collection component 760 that is configured to obtain sensor data related to the environment around the navigation client. The sensor data may comprise any one or more of: acceleration data, sound pressure data, light sensor data, etc. A sensor data analysis component 770 is arranged to receive the collected sensor data to determine environment data 772 indicative of a vehicle type. For example, a navigation client for pedestrian navigation has a different movement behavior than a navigation client placed in a mount of a car. The vehicle type estimator component 750 may be arranged to analyze the environment data 772 in combination with the route characteristics 742 and/or the progress indicators 732 to determine the most likely vehicle type.

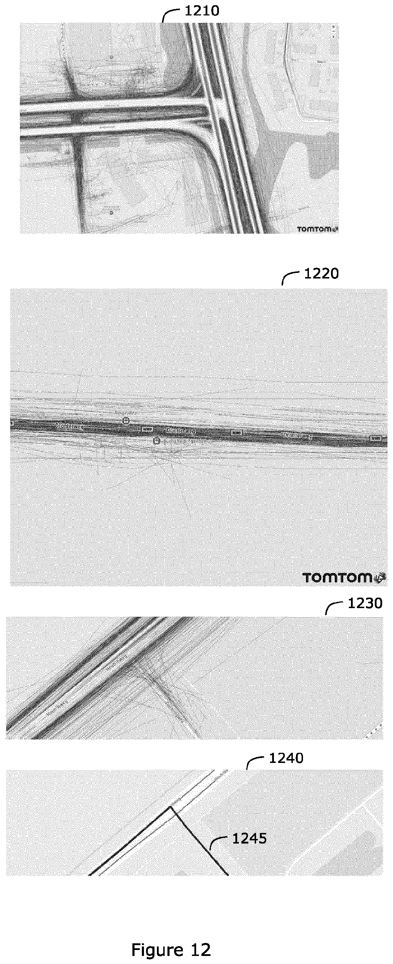

In a variant of the systems and methods for determine vehicle type described above the vehicle type (or mode of transport) may be determined based at least in part on the start and/or destination locations of the previously travelled routes. Figure 12 shows several map portions showing route traces of previously travelled routes overlaid as a heat map.

Map portion 1210 shows route traces trace originating from a firehouse (top of the map portion 1210) and a police station (bottom of the map portion 1210). This may be used to determine an increased probability that the user's vehicle is an emergency vehicle. A probability-based method may be most appropriate here as typically not all originating traffic from such location can be classified as such as there is often residential traffic at such locations as well. As such, if the same user's traces show characteristics unlike other traces at the time and that location (such as driving with high speed on a road that appears to be blocked by traffic) together with the point of origin being an emergency vehicle point of interest this can be used to determine that the vehicle is an emergency vehicle.

The determining of a vehicle type based on sensor data and/or trace data may take into account the number (or proportion) of trips made by a vehicle type in the volume of trips under consideration. For example, if most previously travelled routes indicate a "car" vehicle type, a contra (or alternative indication) may require a high probability before identifying a different type of vehicle as the vehicle type.

The above examples show that the vehicle type may be determined from processing trace data and/or sensor data. The processing receives sensor data and/or trace data and obtains the associated map data comprising road segments with associated metadata and speed information. The speed data may be recorded in the trace data or the sensor data or may be derived from time information associated with the trace data or the sensor data. The trace data or the sensor data may also provide a direction of travel for a vehicle. The processing uses the sequence of road segments, the associated attribute data, and/or the speed data to determine a most likely vehicle type for the trace data or the sensor data. The process may additionally use the relative number of trips for each vehicle type to determine the most likely vehicle type. The determined vehicle type then is used in the other components of a navigation client (e.g. the map search component, the routing component, the guidance component, the user interface component).

It will also be appreciated that accurate determination of the vehicle type is advantageous when further use is made of the route traces for a navigational system. For example, in portion 1220 a set of route traces are shown overlaid on a section of road with two bus stops. By correctly identifying such traces as relating to a bus the regular stopping of the bus at these points can be correctly interpreted by a subsequent traffic estimation algorithm as part of the bus schedule, rather than due to a potential traffic jam. In other words, the further processing of the route traces may take account of expected behavior for the corresponding vehicle type.

Conversely, a stop-start pattern in the previously travelled routes may be matched with known stopping locations as part of determining the vehicle type by the above systems and methods. In a similar manner, known routes (or travel corridors) for particular vehicle types may be used to determine the vehicle type. In particular, a previously travelled route may be matched against known routes to identify at least in part the vehicle type. For example, the portion 1230 shows a set of route traces are overlaid on a section of road, and the portion 1240 shows the same section of road with a known bus route 1245 overlaid. As will be understood if a number of previously travelled routes are identified as following (or matching) the known route (here the bus route 1245) a higher probability may be given to the vehicle type corresponding to the known route when identifying the vehicle type.

*Routing engine example*

In the systems and methods described above use is made of a navigation system (or client) which has functionality of a routing engine. This allows the navigation client to generate recommended routes based on a set of routing parameters (or restrictions). Whilst techniques for such route generation are known in the art and would be known to the skilled person, for ease of understanding some brief examples are described below.

In a first example the navigation client supports the following three routing parameters:

- Shortest (travel) time
- Shortest distance
- Lowest traffic density

In a user interface for the routing preferences in a navigation client these three parameters may be configured using a toggle switch (on/off). This enables the user of the navigation client to set or clear the value of the parameter. The interface may be logically mapped to a binary or Boolean value.

The routing engine is required to determine a route that best matches several routing preferences. This means that the routing engine ideally should determine alternative routes from which an optimal route can be selected. For example, when the user sets the shortest path preference, the routing engine can only determine a single shortest path. This prevents the consideration of any other routing parameters for the user. Yet, there may be several routes that are slightly longer and that possibly better match other routing parameters. Meeting several parameters of the routing parameters to a considerable degree may be preferable than matching just one. Many routing engines thus allow routes that are slightly longer than the shortest route to also be considered as meeting the "shortest route" condition. Such a routing engine implements a routing parameter as a value. The user interface may represent the parameter as two ranges that the user can select. Setting the 'shortest time' then indicates that the user attaches a high importance to having a short travel time and informs the routing engine to use values in the corresponding range.

For example, a routing engine may convert a shortest distance routing parameter into a value that sets a threshold for the maximum path length (relative to the shortest route. The routing engine then processes routes that are shorter than the maximum path length only.

Another example is a routing engine that treats a routing parameter as a weight value in a cost function for determining a lowest cost route. The route R contains K road segments or $R = (r_1,...,r_K)$. In the example, three types of attributes are considered for each road segment $r_j$ of the route R: a length attribute $a_{1,r_j}$, a travel time attribute $a_{2,r_j}$, and a traffic density attribute $a_{3,r_j}$. The routing engine also obtains three weight values $w_1$, $w_2$, $w_3$ associated with respectively a shortest distance parameter, a shortest time parameter, and a lowest traffic density parameter. The cost function C(R) may be a simple combination of the attributes $a_{i,r_j}$ and the associated weights $w_i$ for all K road segments $r_j$ in the route R:

$$C(R) = \sum_{j=1}^{K} \sum_{i=1}^{3} w_i a_{i,r_j}$$

There are a range of functions that determine a cost associated with a route. The cost function may be linear (as per the above equation) but also may comprise more complex non-linear elements (e.g. a threshold operation). The attributes typically are obtained from an electronic map. In some cases, the routing engine may combine attributes of a road segment and then uses the combined attribute in the cost function. An example of a combined attribute is a travel time attribute for a road segment. This travel time attribute may be obtained by dividing the length attribute by the average speed of travel attribute. Some attributes represent information collected from recorded trips (e.g. average speed, traffic density). In some variant implementations, this type of attribute information may be replaced by on-line traffic information services (e.g. to obtain the current traffic speed or the current traffic density).

The above examples show that the routing engine generates a recommended (or optimal) route using attributes associated with the route in combination with the information from the routing parameters.

## Modifications

It will be appreciated that the methods described have been shown as individual steps carried out in a specific order. However, the skilled person will appreciate that these steps may be combined or carried out in a different order whilst still achieving the desired result.

It will be appreciated that embodiments of the invention may be implemented using a variety of different information processing systems. In particular, although the figures and the discussion thereof provide an exemplary computing system and methods, these are presented merely to provide a useful reference in discussing various aspects of the invention. Embodiments of the invention may be carried out on any suitable data processing device, such as a personal computer, laptop, personal digital assistant, mobile telephone, set top box, television, server computer, etc. Of course, the description of the systems and methods has been simplified for purposes of discussion, and they are just one of many different types of system and method that may be used for embodiments of the invention. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more field-programmable-gate-arrays (FPGAs), and/or one or more application-specific-integrated-circuits (ASICs), and/or one or more digital-signal-processors (DSPs), and/or other hardware arrangements. Method steps implemented in flowcharts contained herein, or as described above, may each be implemented by corresponding respective modules; multiple method steps implemented in flowcharts contained herein, or as described above, may be implemented together by a single module.

It will be appreciated that, insofar as embodiments of the invention are implemented by a computer program, then a storage medium and a transmission medium carrying the computer program form aspects of the invention. The computer program may have one or more program instructions, or program code, which, when executed by a computer carries out an embodiment of the invention. The term "program" as used herein, may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

Various examples and embodiments of the invention are set out in the following numbered paragraphs:

NP1. A method of navigational guidance for a navigational system, the method comprising:

obtaining one or more route traces of previously travelled routes of a user of the navigational system, each route comprising a plurality of road segments,
updating an initial set of routing parameters of the navigational system based on attributes of the road segments of the previously travelled routes;
generating, based on the updated set of routing parameters, a route between an initial location and a requested destination location; and
providing navigational guidance to the user for following the generated route, based on the generated route and a current location of the user.

NP2. The method of NP 1 wherein the updating is carried out in response to detecting a deviation from a current recommended route for which navigational system is providing guidance,
wherein the previously travelled route obtained is a previously travelled section of a current route and the initial location is the current location.

NP3. The method of NP 2 wherein the step of updating comprises: determining a routing parameter update based on the attributes of the one or more road segments of the deviation.

NP4. The method of any preceding NP wherein each routing parameter is associated with to one or more road segment attributes.

NP5. The method of NP 4 wherein generating the route comprises using a penalty function to penalize, in accordance with the route parameters, the inclusion of a road segment in the route based on the attributes of the road segment.

NP6. The method of NP 5 wherein each routing parameter specifies a penalty based on a combination of the corresponding road attributes .

NP7. The method of any preceding NP wherein the step of updating comprises applying a trained machine learning algorithm to the attributes of a plurality of road segments of the one or more previously travelled routes to determine one or more routing parameters updates.

NP8. The method of NP 7 wherein the routing parameter updates comprise routing parameters corresponding to the one or more previously travelled routes.

NP9. The method of NP 7 or 8 wherein the routing parameter updates comprise, for a previously travelled route, the respective probability that one or more routing parameter values correspond to said route.

NP10. The method of any one of NPs 1-6 wherein the step of updating comprises:
generating, based on an initial set of routing parameters, one or more recommended routes corresponding to the previously travelled routes, wherein each previously travelled route and the corresponding recommended route has a respective common start location and a respective common end location; and determining a routing parameter update based on a difference between attributes of the road segments of the previously travelled routes and attributes of the road segments of the corresponding recommended routes.

NP11. The method of any one of NPs 1-6 or NP 10 wherein at least one of the previously travelled routes differs from the respective recommended route by one or more deviation road segments, and the difference between attributes of the road segments of the previously travelled routes and attributes of the road segments of the corresponding recommended routes comprises the attributes of the one or more deviation road segments.

NP12. The method of any one of NPs 1-6 or NPs 10-11 wherein a routing parameter update comprises a weighted (linear) combination the road attributes of the difference.

NP13. The method of any preceding NP wherein the navigational system is associated with a vehicle and the one or more previously travelled routes are routes previously travelled by the vehicle.

NP14. The method of any preceding NP wherein the attributes of a road segment comprise one or more of: a length of the road segment; a measure of congestion for the road segment; a vehicle restriction for the road segment; a speed limit for the road segment; a Functional Road Class; an indication that the road segment comprises a toll road; a road segment gradient; a width of the road segment; a turn radius for a turn of the road segment; an average time for traversing a junction of the road segment; an average travel time for the road segment; and an average speed for the road segment.

NP15. The method of any preceding NP wherein the one or more route traces are selected from a plurality of route traces as indicative of a required change in routing parameters.

NP16. The method of NP 15 wherein said selection comprises discarding route traces satisfying any one or more of the following: the previously travelled route of the route trace being consistent with missed guidance instruction; the previously travelled route of the route trace being consistent with a waypoint being added to the route during guidance; the previously travelled route of the route trace differing from a corresponding recommended route of the navigational system according to the current routing parameters in the vicinity of a start or end location; and the previously travelled route of the route trace being consistent with an error of the global positioning system of the navigational system.

NP17. The method of NP 15 or 16 wherein said selection comprises selecting a route trace where the previously travelled route is shorter and/or quicker than a corresponding recommended route of the navigational system according to the current routing parameters.

NP18. A method of training a machine learning algorithm to enable enhanced navigational guidance for a navigational system, the method comprising

receiving a set of start locations and a set of end locations;
generating, by the navigational system, for a number of combinations of start and end locations recommended routes according to a plurality of different sets of routing parameters;
training a machine learning algorithm, using the plurality of recommended routes and the corresponding sets of routing parameters, to thereby generate a trained machine learning algorithm enabled to determine a set of routing parameters that corresponds to an input route; and
providing the trained machine learning algorithm to the navigational system to enable to navigational system to update routing parameters based on previously travelled routes.

NP19. The method of any one of NPs 7-9 or NP 18 wherein the machine learning algorithm comprises a multi-label classification algorithm.

NP20. A method of identifying a mode of transport of a user of a navigational client, the method comprising:

obtaining route data corresponding to a completed portion of a current route of a user of the navigational client, the completed portion of a current route comprising one or more road segments traversed by the user to reach the current location of the user; and
identifying, using the route data, a mode of transport of the user of the navigational client wherein said identification is based at least in part on attributes of one or more of the road segments of the completed portion of the current route.

NP21. The method of NP 20 wherein the route data further comprises one or more route traces of previously travelled routes of the user, and said identifying is based at least in part on attributes of road segments of the previously travelled routes.

NP22. The method of NP 20 or NP 21 wherein the step of identifying comprises determining respective probabilities for a plurality of possible modes of transport and selecting as the identified mode of transport the possible mode of transport with the greatest probability.

NP23 The method of NP 22 further comprising obtaining further route data as the user travels along the current route, and iteratively updating, as the user travels along the current route, the probabilities for the plurality of possible modes of transport based on the further route data.

NP24. The method of NP 23 wherein the probabilities for the plurality of possible modes of transport are updated in response to the further route data indicating the user has traversed a further road segment.

NP25. The method of NP 20 wherein route data comprises global positioning data for the completed portion of the current route and the step of determining comprises identifying the one or more road segments traversed by the user to reach the current location of the user by matching the global positioning data to a map of possible road segments.

NP26. The method of any of NP20-25 wherein route data comprises sensor data of the navigational client associated with the completed portion of a current route wherein said identifying is based at least in part on the sensor data.

NP27. The method of NP 26 wherein the sensor data comprises any of: a speed of travel; an acceleration; noise levels; detected electromagnetic signals; vibration data; timestamped location data; time; direction of travel; light sensor data; and camera data.

NP28. The method of any of NP20-27 further comprising calculating one or more progress indicators for a completed portion of a current route based on the route data wherein said identifying is based at least in part on the determined progress indicators.

NP29. The method of NP 28 wherein the one or more progress indicators comprise any of: a turn radius; a speed of travel; a time of travel; a direction of travel; an acceleration; a deceleration; a braking distance; and a vehicle mass.

NP30. The method of any of NP20-29 wherein the step of identifying a mode of transport comprises identifying, using map data, one or more points of interest associated with a particular mode of transportation on the completed portion of a current route.

NP31. The method of any of NP20-30 wherein the mode of transport indicates any one of: walking; cycling; horse riding; public transport; driving; skateboarding; rollerblading; sailing; and flying.

NP32. The method of any of NP20-31 wherein the mode of transport indicates a vehicle type.

NP33. The method of NP 32 wherein the vehicle type comprises any one of: a car; a light goods vehicle; a heavy goods vehicle; a motorcycle; a bicycle; a bus; an articulated vehicle; ferry; train; pedestrian; a skateboard; rollerblades; a scooter; an e-scooter; an e-skateboard; a boat; and an aeroplane.

NP34. The method of any of NP20-33 wherein the mode of transport indicates a power source.

NP35. The method of any of NP20-34 further comprising generating, by the navigational client, a route between an initial location and a requested end location in accordance with the identified mode of transport; and providing navigational guidance to the user for following the generated route, based on the generated route and a current location of the user.

NP36. The method of any of NP20-35 further comprising identifying one or more routing restrictions based on the determined mode of transport, enabling the navigational client to generate recommended routes in accordance with the one or more routing restrictions.

NP37. The method of NP 36 wherein the routing restrictions comprise any one more of: a minimum height restriction allowed on a recommended route; a minimum and/or maximum speed restriction allowed on a recommended route; a minimum weight restriction allowed on a recommended route; a minimum width restriction allowed on a recommended route; a road type restriction.

NP38. The method of NP 36 or NP 37 further comprising generating, by the navigational client, a route between an initial location and a requested end location in accordance with the one or more routing restrictions; and providing navigational guidance to the user for following the generated route, based on the generated route and a current location of the user.

NP39. The method of any of NP36-38 further comprising generating an alert to the user in response to the navigation client detecting that a current road segment has an attribute that contravenes at least one of the routing restrictions.

NP40. The method of any of NP20-39 further comprising identifying, by the navigational client a road segment for the current location of the user of the navigational client and, in response to the identified road segment contravening one of the routing restrictions, providing an alert to the user.

NP41. The method of any of NP20-40 wherein part of the route data corresponds to one or more previously travelled routes a user of the navigational client, each previously travelled route comprising a plurality of road segments, and said identifying is based at least in part on attributes of road segments of the one or more previously travelled routes.

NP42. An apparatus (or system) arranged to carry out a method according to any one of NP1-41.

NP43. A computer program which, when executed by a processor, causes the processor to carry out a method according to any one of NP1-41.

NP44. A computer-readable medium storing a computer program according to NP43.

It will be appreciated that the methods outlined in any of NP20-41 may be carried out as part of any of the methods of NP1-19.

## Claims

1. A method of identifying a mode of transport of a user of a navigational client, the method comprising:

   obtaining route data corresponding to a completed portion of a current route of a user of the navigational client, the completed portion of a current route comprising one or more road segments traversed by the user to reach the current location of the user; and
   identifying, using the route data, a mode of transport of the user of the navigational client wherein said identification is based at least in part on attributes of one or more of the road segments of the completed portion of the current route.

2. The method of claim 1 wherein the route data further comprises one or more route traces of previously travelled routes of the user, and said identifying is based at least in part on attributes of road segments of the previously travelled routes.

3. The method of claim 1 or claim 2 wherein the step of identifying comprises determining respective probabilities for a plurality of possible modes of transport and selecting as the identified mode of transport the possible mode of transport with the greatest probability.

4. The method of claim 3 further comprising obtaining further route data as the user travels along the current route, and iteratively updating, as the user travels along the current route, the probabilities for the plurality of possible modes of transport based on the further route data.

5. The method of claim 4 wherein the probabilities for the plurality of possible modes of transport are updated in response to the further route data indicating the user has traversed a further road segment.

6. The method of any preceding claim wherein route data comprises sensor data of the navigational client associated with the completed portion of a current route wherein said identifying is based at least in part on the sensor data.

7. The method of claim 6 wherein the sensor data comprises any of:

   a speed of travel;

an acceleration;
noise levels;
detected electromagnetic signals;
vibration data;
timestamped location data;
time;
direction of travel;
light sensor data; and
camera data.

8. The method of any preceding claim further comprising calculating one or more progress indicators for a completed portion of a current route based on the route data wherein said identifying is based at least in part on the determined progress indicators, optionally wherein the one or more progress indicators comprise any of:

a turn radius;
a speed of travel;
a time of travel;
a direction of travel;
an acceleration;
a deceleration;
a braking distance; and
a vehicle mass.

9. The method of any preceding claim wherein the mode of transport indicates any one of:

walking;
cycling;
horse riding;
public transport;
driving;
skateboarding;
rollerblading;
sailing; and
flying.

10. The method of any preceding claim wherein the mode of transport indicates a vehicle type, optionally wherein the vehicle type comprises any one of:

a car;
a light goods vehicle;
a heavy goods vehicle;
a motorcycle;
a bicycle;
a bus;
an articulated vehicle;
ferry;
train;
pedestrian;
a skateboard;
rollerblades;
a scooter;
an e-scooter;
an e-skateboard;
a boat; and
an aeroplane.

11. The method of any preceding claim further comprising identifying one or more routing restrictions based on the determined mode of transport, enabling the navigational client to generate recommended routes in accordance with the one or more routing restrictions, optionally wherein the routing restrictions comprise any one more of:

a minimum height restriction allowed on a recommended route
a minimum and/or maximum speed restriction allowed on a recommended route
a minimum weight restriction allowed on a recommended route
a minimum width restriction allowed on a recommended route
a road type restriction.

12. The method of claim 11 further comprising generating, by the navigational client, a route between an initial location and a requested end location in accordance with the one or more routing restrictions; and
providing navigational guidance to the user for following the generated route, based on the generated route and a current location of the user.

13. The method of any one of claims 11 or 12 further comprising generating an alert to the user in response to the navigation client detecting that a current road segment has an attribute that contravenes at least one of the routing restrictions.

14. A system arranged to carry out a method according to any one of claims 1 to 13.

15. A computer-readable medium storing a computer program which, when executed by a processor, causes the processor to carry out a method according to any one of claims 1 to 13.

100

102

104

106

108

110

112

121

120

114

124

126

116

118

122

<u>FIGURE 1</u>

Figure 2a

Figure 2b

300

Figure 3a

360

```
┌─────────────────────┐
│         365         │
└─────────────────────┘
           │
           ▼
┌─────────────────────┐
│         370         │
└─────────────────────┘
           │
           ▼
┌─────────────────────┐
│         375         │
└─────────────────────┘
           │
           ▼
┌─────────────────────┐
│         380         │
└─────────────────────┘
```

Figure 3b

Figure 4

Figure 5a

Figure 5b

Figure 6

Figure 7

Figure 8

Figure 9

1000

```
┌─────────────────────────────┐
│                             │
│            1010             │
│                             │
└─────────────────────────────┘
               │
               ▼
┌─────────────────────────────┐
│                             │
│            1020             │
│                             │
└─────────────────────────────┘
               │
               ▼
┌ ─ ─ ─ ─ ─ ─ ─ ─ ─ ─ ─ ─ ─ ─ ┐
│                             │
             1030
│                             │
└ ─ ─ ─ ─ ─ ─ ─ ─ ─ ─ ─ ─ ─ ─ ┘
               │
               ▼
┌ ─ ─ ─ ─ ─ ─ ─ ─ ─ ─ ─ ─ ─ ─ ┐
│                             │
             1040
│                             │
└ ─ ─ ─ ─ ─ ─ ─ ─ ─ ─ ─ ─ ─ ─ ┘
               │
               ▼
```

Figure 10

Figure 11

Figure 12

Europäisches
Patentamt
European
Patent Office
Office européen
des brevets

## PARTIAL EUROPEAN SEARCH REPORT

under Rule 62a and/or 63 of the European Patent Convention.
This report shall be considered, for the purposes of
subsequent proceedings, as the European search report

**Application Number**

EP 22 19 3750

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 895 463 B1 (COPE CRAIG [US] ET AL) 19 January 2021 (2021-01-19) | 1,6,7,9, 10,14,15 | INV. G01C21/28 |
| Y | * column 16, line 64 – column 18, line 56 * | 3 | G01C21/34 |
| | * column 26, line 33 – column 30, line 43 * | | |
| | ----- | | |
| X | US 2018/017400 A1 (ANDREW FELIX GERARD TORQUIL IFOR [US]) 18 January 2018 (2018-01-18) * paragraphs [0023], [0024], [0049]; claims 1-4 * | 1,14,15 | |
| | ----- | | |
| X | US 2015/177013 A1 (SILISKI MICHAEL [US] ET AL) 25 June 2015 (2015-06-25) * paragraphs [0004], [0043] – [0047]; figure 2 * | 1,3-5, 14,15 | |
| | ----- | | |
| Y | WO 2013/014612 A1 (IBM [US]; IBM UK [GB] ET AL.) 31 January 2013 (2013-01-31) * claims 1,2 * | 3 | |
| | ----- | | **TECHNICAL FIELDS SEARCHED (IPC)** |
| | | | G01C |

## INCOMPLETE SEARCH

The Search Division considers that the present application, or one or more of its claims, does/do
not comply with the EPC so that only a partial search (R.62a, 63) has been carried out.

Claims searched completely :

Claims searched incompletely :

Claims not searched :

Reason for the limitation of the search:

**see sheet C**

| Place of search | Date of completion of the search | Examiner |
|---|---|---|
| The Hague | 11 July 2023 | Tabellion, Marc |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04E07)

Europäisches
Patentamt
European
Patent Office
Office européen
des brevets

**INCOMPLETE SEARCH
SHEET C**

Application Number

EP 22 19 3750

Claim(s) searched incompletely:
         1-15

Reason for the limitation of the search:

In reply to the invitation pursuant to Rule 63(1) EPC, the applicant has indicated that the inclusion of sensor data into the route data and the identifying of the mode of transport based thereon as in claim 6 is to be understood such that they are also included in the route data, and the identifying is also based thereon, i.e. in addition to the route data containing road segments of a completed portion of the current route, and the identification being based on attributes of the road segments. Consequently, an interpretation of the route data containing only sensor data, and "attributes" being derived from the sensor data has been excluded by the applicant. Such subject-matter is not covered by the search. The search is limited to any situation where attributes are identified via the respective road segment, which are in turn contained in the road data. Claim 1 remains to be amended to specify that the route data do indeed contain segments of the completed portion of the current route.
Likewise, the applicant has excluded, with respect to claim 2, that the route data could exclusively contain traces of previously travelled routes, and the identification could be exclusively based on attributes of segments of previously travelled routes, as suggested e.g. on page 39, lines 10 and 23 of the description. Such subject-matter is not covered by the search, either.

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

**1-10, 14, 15(all partially)**

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

**LACK OF UNITY OF INVENTION**
**SHEET B**

Application Number

EP 22 19 3750

The Search Division considers that the present European patent application does not comply with the requirements of unity of invention and relates to several inventions or groups of inventions, namely:

```
1. claims: 1, 2, 6, 7, 9, 10(completely); 14, 15(partially)

      Mode of transport identification based on attributes of road
      segments of previously travelled routes
                         ---


2. claims: 3-5, 8(completely); 14, 15(partially)

      Mode of transport identification with plural mode of
      transport probability determination
                         ---


3. claims: 11-13(completely); 14, 15(partially)

      Mode of transport identification with routing restriction
      identification and enabling of recommended route generation
                         ---
```

## ANNEX TO THE EUROPEAN SEARCH REPORT
## ON EUROPEAN PATENT APPLICATION NO.

EP 22 19 3750

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2023

| Patent document cited in search report | | Publication date | Patent family member(s) | | Publication date |
|---|---|---|---|---|---|
| US 10895463 | B1 | 19-01-2021 | US 10895463 B1 | | 19-01-2021 |
| | | | US 2021063173 A1 | | 04-03-2021 |
| | | | US 2022366326 A1 | | 17-11-2022 |
| US 2018017400 | A1 | 18-01-2018 | CN 109477726 A | | 15-03-2019 |
| | | | EP 3485228 A1 | | 22-05-2019 |
| | | | US 2018017400 A1 | | 18-01-2018 |
| | | | WO 2018013379 A1 | | 18-01-2018 |
| US 2015177013 | A1 | 25-06-2015 | NONE | | |
| WO 2013014612 | A1 | 31-01-2013 | US 2014188788 A1 | | 03-07-2014 |
| | | | WO 2013014612 A1 | | 31-01-2013 |

EPO FORM P0459

For more details about this annex : see Official Journal of the European Patent Office, No. 12/82